(19) Europäisches Patentamt
European Patent Office
Office européen des brevets

(11) **EP 1 570 885 B1**

(12) **EUROPEAN PATENT SPECIFICATION**

(45) Date of publication and mention
of the grant of the patent:
**12.09.2007   Bulletin 2007/37**

(51) Int Cl.:
*A63F 9/04* *(2006.01)*      *G06K 9/46* *(2006.01)*

(21) Application number: **05101488.4**

(22) Date of filing: **28.02.2005**

(54) **Dice spot number determination method, dice spot number determination apparatus, game apparatus using same, and dice spot number determination game system**

Verfahren, Anordnung und Spielgerät zur Bestimmung der Augenzahl eines Würfels.

Procédé, appareil et appareil de jeu détermination du nombre de points sur un dé.

(84) Designated Contracting States:
**DE FR GB NL**

(30) Priority:  **04.03.2004   JP 2004060311**

(43) Date of publication of application:
**07.09.2005   Bulletin 2005/36**

(73) Proprietor: **HUDSON SOFT CO., LTD.**
**Sapporo-shi,**
**Hokkaido (JP)**

(72) Inventors:
• **Itagaki, Fumihiko**
**Hudson Soft Co.,Ltd.**
**Sapporo-shi, Hokkaido (JP)**
• **Murakumi, Satoshi**
**Hudson Soft Co., Ltd.**
**Sapporo-shi, Hokkaido (JP)**

(74) Representative: **Brunner, Michael John et al**
**Gill Jennings & Every LLP**
**Broadgate House**
**7 Eldon Street**
**London EC2M 7LH (GB)**

(56) References cited:
**US-A1- 2002 068 625      US-B1- 6 609 710**
**US-B1- 6 690 156**

• **PATENT ABSTRACTS OF JAPAN vol. 017, no. 655 (C-1136), 6 December 1993 (1993-12-06) & JP 05 212159 A (SAMMY IND CO LTD), 24 August 1993 (1993-08-24)**
• **PATENT ABSTRACTS OF JAPAN vol. 013, no. 501 (C-652), 10 November 1989 (1989-11-10) & JP 01 198576 A (TAITO CORP), 10 August 1989 (1989-08-10)**
• **ANONYMOUS: "Die Würfel sind gefallen: Ein MOTOMAN SV 3 XL lädt im Heinz Nixdorf MuseumsForum zu einer Spielpartie ein" MOTOMAN NEWS 1/2002, 2002, page 3, XP002335201**
• **CORREIA B. ET AL: 'Automated detection and classification of dice' PROCEEDINGS OF THE SPIE vol. 2423, March 1995, SPIE, BELLINGHAM, VA, US, pages 196 - 202, XP002340768**

EP 1 570 885 B1

**Description**

BACKGROUND OF THE INVENTION

Field of the Invention

The present invention relates to a dice spot nu mber determination method, a dice spot number determination apparatus, a game apparatus using the same, and a dice spot number determination game system, and in particular to a dice spot number determination method, a dice spot number determination apparatus, and a game apparatus using the same, and a dice spot number determination game system, which can automatically determine in image recognition spot numbers on a plurality of dice even when a plurality of players roll the dice in the same location at the same time.

Background Information

A *sugoroku* game, for example, requires dice as a tool to play the game and some home video game machines, board games or the like require dice. Conventionally determination of a spot number on a thrown die is performed by visual observation of game participants.
However, in games such as electronic game personal machines or electronic personal computers, almost all of the game contents, game progression, win-loss records and the like are displayed on an image display and these games are performed by operating a controller or a keyboard. In case a player who is familiar with games played on game personal machines or personal computers play a conventional *sugoroku* game, the player may not be familiar with an old-fashioned game method in which a player rolls a die with his or her hand and the spot number on the die is visually determined by the player. On the other hand, the elderly find it difficult to become familiar with a purely electronic game in which a game is performed by an operation of a controller.
There is also the case where a die is used in something other than a game. For example, in an arithmetic lesson in school, a math problem is set using a die as a teaching tool. Since the die is small, it is possib le that students cannot see the state of the die, such as the spot number and the spot colour clearly, which causes weakening recognition of participation in lessons and reducing the interest in lessons by half.
Japanese Unexamined Patent Publication No. 08-215423 discloses a dice spot recognition apparatus that can electronically determine the number of spots on a die. In the apparatus, a magnetic element is housed in each face of the numbers **1 - 6**, a magnetic field generated in the magnetic element is detected by a magnetic sensor, and a detection signal is processed in a process control circuit, thereby determining the number of spots on the dice.
However, since a special die that houses a magnetic element has to be used, dice commercially sold in a toy store or the like are not usable in such an apparatus. Also, since the dice spot number determination in this known apparatus is made on the assumption that there is only one player, the dice spot number determination cannot be made efficiently in the case of a plurality of players rolling dice together.
Furthermore, when, in a game in which one player uses a plurality of dice, the dice stop close to each other, a combination of spot numbers of the dice may be misinterpreted as a spot number from one d ie.
Further, in the case of a plurality of players throwing dice at the same time, the dice inevitably exist at the same location at the same time. In this case, on top of determining the spot number of each die, it also has to be determined which dice belong to which player and it is difficult for that determination to be made automatically.
In view of the above, there exists a need for a dice spot number determination method, a dice spot number determination apparatus, a game apparatus using the same, and a dice spot number determination game system which overcome the above-mentioned problems in the known art. The present invention addresses this need in the related art and also other needs, which will become apparent to those skilled in the art from this disclosure.
US 6609710 describes a game apparatus for use with table games involving dice. The apparatus can automatically monitor, record and analyse the proceedings of the game. JP 05212159 describes a game device which uses a CCD camera as a CCD sensor to check the spots on a die. "Automated Detection and Classification of Dice by Correia et al (196/SPIE volume 2423)" describes a machine that can recognise spots on None of these game machines can associate different dice with multiple dice rolled together. Determination of spot numbers begins with "6" and goes down to "1". different players.
It is an object of the present invention to provide a dice spot number determination method, a dice spot number determination apparatus and a game apparatus using the same, which can identify a player for each die and determine a spot number for each dice even when a plurality of players throw a plurality of dice at the same time.
According to a first aspect of the present invention, there is provided a dice spot number determination method, comprising the steps of:

providing plural kinds of dice, each die having at least six faces, describing from one spot to at least six spots on each face, and each dice having a feature to identify a player associated with each of the kinds of dice;

inputting the feature of the dice for each player by an inputting device or by capturing the feature by an image-capture device;

recording the feature in a recording device;

capturing an image of at least one of an upper face or a lower face of each die to generate an image signal;

identifying a player for each kind of the dice out of the plural kinds of the dice within the image of the captured face based upon the recorded feature and the image signal; and

determining a spot number of each die of the plural kinds of the dice within the image of the captured face based upon the image signal;

wherein the spot described on each of the six faces is shown as at least one point and the spot number determination is made based upon a determination condition of at least one of a feature of the at least one point, the number of the point(s), and a location state of the at least one point within a predetermined area of the image of the captured face; and

wherein the spot number determination first determines if the number of the point within the predetermined area of the image of the captured face is **"1"** and if not a determination of the spot numbers corresponding to **"6"** then **"5"** then **"4"** then **"3"** then **"2"** is made.

According to the above method, the kind of the dice within the image of the captured face is determined based upon the image signal and a player for each die is identified from the kind of the die, and a spot number of the die is determined based upon at least one of the feature of spots, the number of the spots, and a location state of the spots on the image of the captured face. Thereby even when a plurality of players throw a plurality of dice at a time, a dice spot number can be automatically determined and further a player for each dice can be identified.

According to a second aspect of the present invention there is provided, a dice spot number determination apparatus, for use with plural kinds of dice, each die having at least six faces and describing from one spot to at least six spots on each face, and having a feature to identify a player associated with each of the kinds of dice; the apparatus comprising:

an image-capture section to capture an image of at least one of an upper face or a lower face of each die of the plural kinds of the dice to generate an image signal;

an input section to input the feature of the dice for each player, for identifying the player;

a recording section to record the inputted feature;

a vessel in which a space for rolling the plurality of the dice is defined and the image-capture section is located in a lower part or an upper part thereof;

a determination section to identify the player for each of the kinds of dice within the image of the captured face based upon the recorded feature and the image signal and determine a spot number of each of the plurality of the dice within the image of the captured face based upon the image signal; and

an output section to display or output as a voice representation a determination result of the spot number for each player by the determination section as a numerical value or output the determination result as dice information for an electronic game;

wherein the spot described in each of the six faces is shown as at least one point and the determination section performs the spot number determination based upon a determination condition of at least one feature of the at least one point of each spot, the numbers of point(s), and a location state of the at least one point within a predetermined area of the image of the captured face; and

wherein the determination section first determines if the number of the point within the predetermined area of the image of the captured face is **"1"** and if not a determination of the spot numbers corresponding to **"6"** then **"5"** then **"4"** then **"3"** then **"2"** is performed.

According to the above, the spots described on the dice rolled in the vessel are captured by the image-capture section, the kind of the dice within the image is determined based upon the image signal from the image-capture section, and a player for each die is identified from the kind of dice, and further, a spot number of the each die for each kind is determined based upon a determination condition of at least one of the feature of the spots, the number of the spots, and a location state of the spots within a predetermined area on the image of the captured face, and the determination result is displayed and voiced and outputted as dice information. Thereby even when a plurality of players throw a plurality of dice at a time, a dice spot number can be automatically determined and further a player can be identified.

A game apparatus may be provided comprising the dice spot number determination apparatus; and a control section programmed to:

perform a game from a memory medium storing game software or a game provided by a connection to the Internet;

display the image during performing the game on an internal or external display; and

display on the display, output as a voice representation, or incorporate into the game as necessary a determination result with regard to the spot determination for each player obtained by the dice spot number determination section.

According to the above apparatus, by the dice spot number determination section the kind of the dice within the image of the captured face is determined and a player for each die is identified based upon the image information with regard to the image of the spots for each die, and a spot number of each die for each kind is determined/outputted based upon at least one of the feature of spots, the number of the spots, and a location state of the spots within a predetermined area on the image. As a result, the spot number for each player is reflected in a game at the same time or is electrically displayed on a spot number display.

ADVANTAGES OF THE INVENTION

According to the dice spot number determination method and the dice spot number determination apparatus, since the kind of the dice within the image of the captured face is determined based upon the image signal, a player is identified by this kind, and further, a determination of the spot number for each die is automatically made, even when a plurality of players throw a plurality of dice in one play at the same time, the spot number for each die can be automatically determined. Thereby the player does not have to wait for another player to play a game, which leads to a large reduction in a game time. Also, since the spot numbers of a plurality of dice of different kinds can be determined for each different kind, the dice of the different kind a player has can be used effectively.

The kind of dice may be determined based upon the image capture result of the spots of the dice obtained by the dice spot number determination section, even when a plurality of players throw a plurality of dice in one play at the same time, a player for each die can be identified, and further, since the spot number can be determined by analyzing the feature of the spots described on the image, the spot number of the dice is not only automatically determined but also the progress of the game can be automated. Also, the game apparatus can be applied to various games using a die. Thereby a player does not have to wait for another player to play a game, which leads to a large reduction in a game time.

These and other objects, features, aspects and advantages of the present invention will become apparent to those skilled in the art from the following detailed description, which, taken in conjunction with the annexed drawings, discloses preferred embodiments of the present invention.

BRIEF DESCRIPTION OF THE DRAWINGS

Referring now to the attached drawings which form a part of this disclosure:

FIG. 1 is a block diagram showing the construction of a dice spot number determination apparatus in a first preferred embodiment;

FIG. 2 is a view showing another example of an image -capture section;

FIG. 3 is a view showing a different example of an image-capture section;

FIG. 4 is a flowchart showing the processing of a dice spot number determination method in the first preferred embodiment;

FIG. 5 is a flowchart showing another processing example of a dice spot number determination method in the first preferred embodiment;

FIG. 6 is a flowchart showing detail of the dice spot number determination process;

FIG. 7 is a diagram showing how each of the spot numbers "**1**" - "**6**" of a die appears;

FIG. 8 is a flowchart showing detail of the processing in step **151** in **FIG. 6**;

FIG. 9 is a flowchart showing detail of the processing in step **152** in **FIG. 6**;

FIG. 10A is a diagram showing the detailed location of each point of the spot number "**6**" on a die;

FIG. 10B is a diagram showing the detailed location of each point of the spot number "**6**" on a die;

FIG. 10C is a diagram showing the detailed location of each point of the spot number "**3**" on a die;

FIG. 10D is a diagram showing the detailed location of each point of the spot number "**6**" on a die;

FIG. 11 is a flowchart showing detail of the processing in step **153** in **FIG. 6;**

FIG. 12 is a diagram showing the detailed location of each point of the spot number "**5**" on a die;

FIG. 13 is a diagram showing a state where three dice of the spot numbers "**2**", "**2**", and "**4**" are put together to falsely form the spot number "**5**";

FIG. 14 is a flowchart showing detail of the processing in step **154** in **FIG. 6**;

FIG. 15 is a diagram showing a state in which four dice are put together to form the spot number "**4**";

FIG. 16 is a diagram showing point location in a spot pattern of th e spot number "**4**" on a die;

FIG. 17 is a diagram showing a state in which three dice, each having the spot number "2", are put together to form the spot number "4";

FIG. 18 is a flowchart showing detail of the processing in step 155 in FIG. 6;

FIG. 19 is a diagram showing point location in a spot pattern of the spot number "3" on a die;

FIG. 20 is a diagram showing a state in which two dice, are put together to form the spot number "3";

FIG. 21 is a diagram showing an example in which, in case three di ce are put together, the spot number "2" or "3" is formed depending on their relative location;

FIG. 22 is a flowchart showing detail of the processing in step 156 in FIG. 6; and

FIG. 23 is a block diagram showing a game apparatus in a second preferred embodiment of the invention.

## DETAILED DESCRIPTION

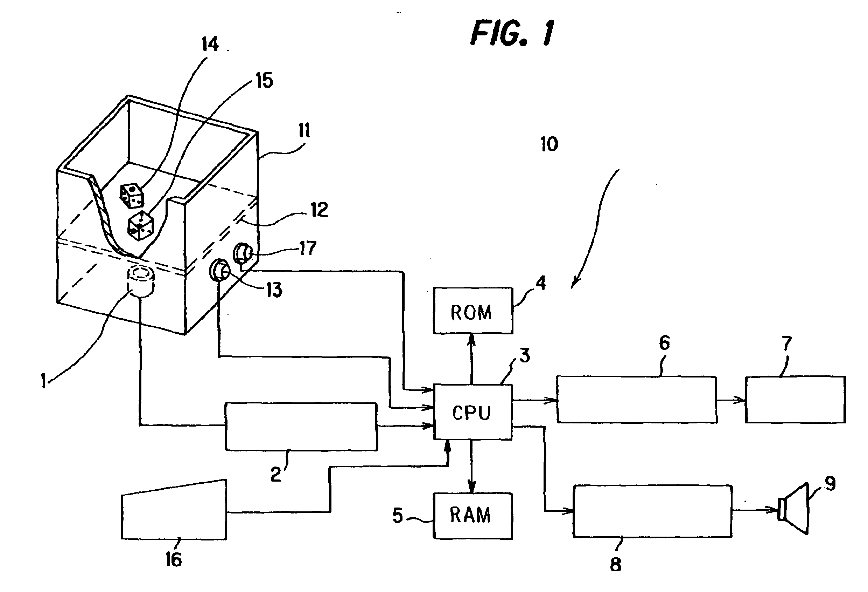

FIG. 1 is a block diagram showing the construction of a first preferred embodiment of a dice spot number determination apparatus. A dice spot number determination apparatus 10 comprises an image-capture section 1, an image processing section 2, a CPU 3, a ROM 4 (read only memory), a RAM 5 (random access memory), a display control section 6, a display section 7, an audio processing section 8, a speaker 9, a box 11 where dice 14, 15 are rolled, a transparent board 12 disposed inside the box 11, a reset switch 13, an input section 16 equipped with a numeric key pad capable of inputting hiragana, alphanumeric characters, symbols and the like by switching between different modes, and a determination switch 17 that is operated in notifying the CPU 3 of "end of the throwing" after throwing dice.

It should be noted that the connection between the CPU 3 and other circuit sections is actually made through an interface (I/F), which is omitted herein. A determination section is composed of the image processing section 2, the CPU 3, the ROM 4, and the RAM 5, and an output section is composed of each of the display control section 6 and the display section 7, and each of the audio processing section 8 and the speaker 9.

Dice 14, 15 are available in the market and a player may have his or her own, but the dice 14, 15 may be sold with the dice spot number determination apparatus. In the apparatus of FIG. 1, the spot number is displayed in numbers and also outputted by audio, but either of them alone may be used.

The image-capture section 1 is formed of an image sensor that can read by colour or black and white, such as a CCD (charge coupled device) or a MOS (metal oxide semiconductor transistor), and the capture principle of the image sensor is the same as in a digital camera. As described later, since the spot number "1" of dice may have a red colour (particularly in China and Japan), use of an image sensor to enable colour capture is appropriate. However, in an image sensor for black and white, red appears lighter than black, and sometimes the spot of spot number "1" is different in size from the other spots. These differences allow distinction between the spot of spot number "1" and the spots of the other spot nu mbers. Therefore, an image sensor for black and white may be used.

Younger players such as students in the lower grades in an elementary school or pre-school children may tend to bring their faces close to the box 11 or look into the box 11. In this case, it is possible that the image-capture section 1 captures both the eyes of the player and recognizes the two spots for the spot number "2" in error. Therefore, the image-capture section 1 is equipped with a lens with a bright release F value to reduce depth of field, which allows only the dice to be clearly captured. Alternatively, an infrared sensor or the like may be disposed in the box 11 to detect that a player's face is coming close to the box 11 so as to emit a warning.

In the image processing section 2, digital processing of an image signal from the image-capture section 1 is carried out. The CPU 3 controls the entire apparatus, as well as processing shown in each flowchart as d escribed later. The ROM 4 is a memory that stores programs for actuating the CPU 3 and can use a non-volatile memory or a flash memory. The RAM 5 is a memory that temporarily stores setting values or processing results.

The display control section 6 performs control for displaying a determination result of the CPU 3. The display section 7 comprises a coloured or a monochrome liquid crystal display, a cathode ray tube, or the like and displays the determination result with regard to the spot number made by the CPU 3. The audio processing section 8 performs voice synthesis of the determination result for outputting. The speaker 9 outputs an audio sound from an audio signal provided by the audio processing section 8 to imitate a voice.

The box 11 has an opening in its top and has a transparent board 12 (transparent glass or transparent plastic) therein to divide the box 11 into two parts for forming an upper part and a lower part. The space above the transparent board 12 in the box 11 is a space for rolling dice. The image-capture section 1 is installed on the bottom section and captures the images of the lower faces of the dice 14, 15. The box 11 is formed of a transparent plastic or glass, or a lamp for illumination is disposed in the vicinity of the image-capture section 1 inside the box 11 in order to avoid the problem that, when it is dark in the box 11, a clear picture cannot be taken. Alternatively, an electronic flash (strobe) that momentarily emits light only during image capture may be used as a light source.

Further, a reset switch 13 and a determination switch 17 are located at a position within a player's easy reach on an outer wall of the box 11. Since the CPU 3 cannot recognize whether or not all the dice have been thrown after the dice are thrown, an actuation of the determination switch 17 allows the CPU 3 to be notified and recognize that all the dice have been thrown inside the box **11**. Alternatively, a sensor or the like may be provided to detect the dice to automate the notification. The reset switch **13** is operated for clearing the previous determination result in case the dice **14, 15** (or one of them) are thrown after the dice have been rolled and the determination of the spot number for the dice has been made.

When a player throws both the dice **14**, **15** or one of them inside the box **11** on the transparent board **12** they stop rolling after a time. The lower faces of the dice **14**, **15** after stopping are captured by the image-capture section **1**. The captured image is inputted into the image processing section **2**, which provides a signal format that can be processed by the CPU **3**. An image signal from the image processing section **2** is stored in the RAM **5** under control of the CPU **3**. The CPU **3** checks image contents of the image processing section **2** according to the program of the ROM **4**, to determine which of the "**1**" to "**6**" spot numbers on the dice **14, 15** it is.

The determination result is displayed in numbers on a screen of the display section **7** through the display control section **6** and is outputted by the audio processing section **8** and the speaker **9**. In this case the audio output is performed only one time for one determination result, and the display on the display section **7** continues to be made until the next image capture timing.

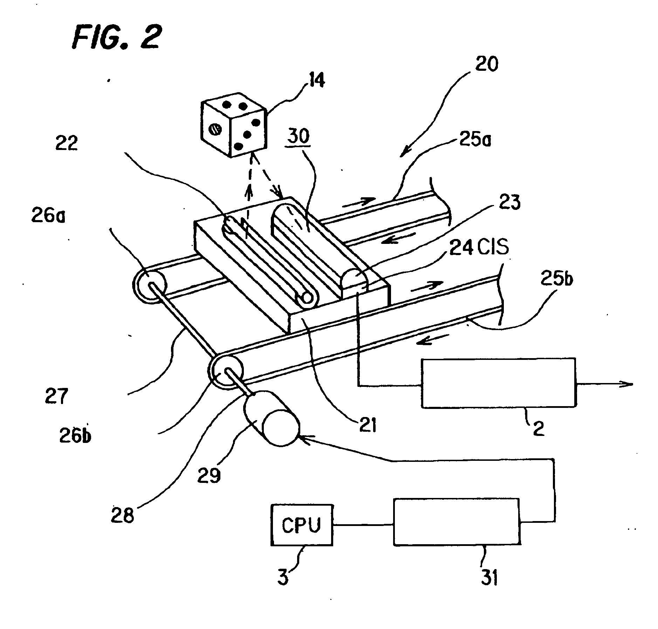

**FIG. 2** shows another example of an image-capture section. The image-capture section **20** is formed using a scanner principle (like that known in a peripheral device for a personal computer), and is disposed under the lower face of the transparent board **12** (on the bottom of the box **11**). The image-capture section **20** comprises a base **21** reciprocating in the lower part of the box **11**, a lamp **22** (a fluorescent lamp, a white LED, or the like) for illumination, a reading section **30** composed of a lens **23**, and a CIS **24** (Contact Image Sensor) and disposed in parallel to the lamp **22,** belts **25a**, **25**b to reciprocate the base **21** under the lower face of the transparent board **12,** pulleys **26a**, **26**b to support end sections of the belts **25a**, **25**b, a shaft **27** connecting the pulleys **26a**, **26**b, a motor **29** connected to the shaft **27** through a rotation shaft **28**, and a motor drive section **31** to drive the motor **29** under control of the CPU **3**.

It is noted that a chain may be used as an alternative for the belts **25**a, **25**b where a chain gear is used in place of the pulleys **26a**, **26**b. A CCD image sensor may be used as an alternative to the CIS **24**. In the case of using a CCD image sensor, an optical system may be adopted in which a reflected image from a reading face is introduced through one or a plurality of mirrors and further through an imaging lens to the CDD image sensor.

In **FIG. 2**, when the motor drive section **31** is driven under the control of the CPU **3**, power is supplied to the motor **29**. The pulleys **26a**, **26**b are rotated by rotation of the motor **29** and the belts **25a**, **25**b are rotated in the direction of an arrow and at the same time the light **22** is switched on. The base **21** travels by rotation of the belts **25a**, **25**b. As the base **21** travels, the surface of the transparent board **12** is continuously illuminated by an area corresponding to the lamp length and width. The die **14** is illuminated by this illumination and the reflected light from the lower face of the die **14** is read in the reading section **30** and is supplied to the image processing section **2**.

The image-capture section **1** in **FIG. 1** has the advantage that the number of the components is reduced and other than that, the time required for image inputs is shortened since mechanical, movable parts are not used for image-reading. However, since a lens for imaging is used, extension of an image-receiving range lengthens a distance from a tip end of the image-capture section **1** to the transparent board **12**, namely heightens a location position of the transparent board **12** and as a result, it is difficult to reduce the entire height of the box **11**. On the other hand, in the image-capture section **20** in **FIG. 2**, the number of the components is increased, but since the height of the image-capture section **1** can be reduced, the position of the transparent board **12** can be lower. However, since the image-capture section **20** performs the reading by travelling across the reading section **30,** image-reading takes more time as compared to the image-capture section **1**.

It is intended that the spot number is outputted with the box **11** stationary on a desk or a tatami mat and the dice are rolled on it, but the box **11** may be moved with the dice still inside the box **11**. In this case if the opening of the box **11** is wide, the dice tend to jump out of the box **11**. Accordingly, it is preferable that the size of the opening of the box **11** is small and, further, the weight of the box **11** is reduced.

Since in **FIGS. 1** and **2**, the image of the die **14** (**15**) is captured from the lower face and a player who has rolled the dice looks at the upp er face of the dice **14**, there is a difference in the spot number between the image of the captured lower face and the upper face. Therefore, it is necessary to correct the numerical value obtained from the lower face and convert it to that of the spot number of the upper face. A calculation corresponding to "**7** - an image capture value" can be performed to do this. For example, when the value obtained from the lower face of the dice **14** is "**6**", the spot number of the upper face of the dice **14** is emitted as "**1**" (7 - 1), and likewise when the value is "**2**", the spot number of the upper face of the dice **14** is emitted as "**5**" (7 - 2).

However, the spot number of the lower face may be the spot number as it is and in particular in case a box in which an upper face of the dice cannot be seen from an outside of the box is used, it is preferable that the spot number of the lower face is determined as the spot number as it is, to avoid the necessity of the above calculation.

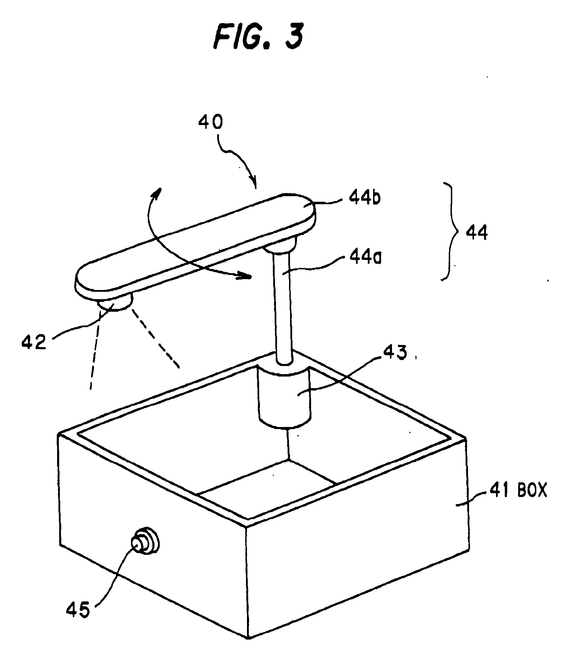

**FIG. 3** shows a further example of an image-capture section. An image-capture section **40** is adapted to view the dice from above the box **41**, as well as rotate a camera section **42** corresponding to the image-capture section **1** in **FIG. 1** within an angle of at least **45**° and further retract the camera section **42** from the box **41** when necessary.

A support section **43** is formed in one corner of the box **41** and a stand **44** is rotatably mounted and movable upward and downward to the support section **43**. The stand **44** comprises a cylindrical pole 44a, and a holder 44b that is mounted horizontally and rotatably at an upper end of the pole 44a. The holder 44b can be rotated horizontally by hand and a tip of the holder 44b can be moved from one section of the box **41** to the centre of the box **41**. The tip of the holder 44b is positioned to be above the centre of the box **41** when the camera section **42** shoots the die **14** or the like.

The camera section **42** is mounted to a free end or tip of the holder 44b. The camera section **42** is formed of a camera, such as a combination of an optical lens and an image-capture element of CCD or MOS and a lens, or a combination of the image-capture element and the lens, further including an image processing section, and can take a picture such that the entire bottom face of the box **11** is within the vision field. Pushing an upper portion of the pole 44a causes the height thereof to be lowered, and lifting up the pole 44a causes the position of the holder 44b to be raised. A reset switch **45** having the same effect as the reset switch **13** in **FIG. 1** is mounted to a side face of the box **41**.

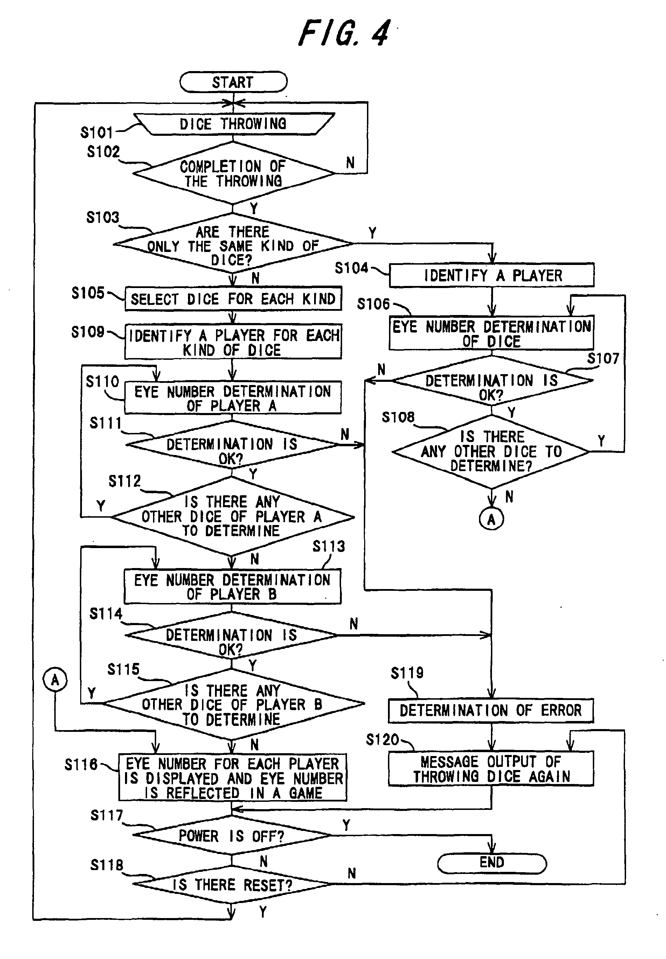

**FIG. 4** shows an entire processing of a dice spot number determination method in a first preferred embodiment of the present invention. Processing routines shown in **FIG. 4** are stored as programs in the ROM **4**. Below it is explained how a dice spot number determination is made in the case of two players (A and B) playing a game, by using the dice spot number determination apparatus method **10** shown in **FIG. 1**.

Two players (A and B) each have two dice. Either or both of the players carries the two dice with the same specification, but the dice of one player are different in specification from the dice of the other player. Note that it may be not necessary for one player to carry the two with the same specification so long as the two dice for the one player are different in specification from the two dice for the other player. One of the two players throws two dice into the box **11**, the other subsequently throws two dice into the box **11**. As a result four dice are thrown into the box **11** and thereafter, the spot number determination is made. Note that "S" shown in the flowcharts in the following figures, including **FIG. 4** indicates "step".

The dice spot number determination apparatus **10** starts to operate by switching on the power source and then is initialized. After the dice for the two players are thrown (**S101**), one of the players pushes the determination switch, which causes the CPU **3** to be notified of completion of the throwing (S**102**).

The CPU **3** notes the completion of the dice throwing and then reads the image from the image-capture section **1** through the image processing section **2**, analyses the image and determines the kind of the dice from the features of each dice (S**103**). There is a case in which after one player throws the dice, the player pushes the determination switch **17**, and then the next player throws dice. In this case, a player is identified by assuming that one player throws dice with the same specification (S**104**). When it is determined that plural kinds of the dice exist in the box **11**, the dice are classified in groups for each kind (S**105**).

Identification of a player may be made in such a way that the kinds of dice to be used differ between players and a combination between the kind of the dice and a player is registered in advance. Other than input of the input section **16**, data may be made by capturing images of dice placed on the transparent board **12** for registration. The kinds of dice may be different from one another by, for example, ma king a colour of an outer face of a die for one player different from that of a die for the other player (in case an image processing of a colour recognition is possible), making the colour of the spots of a die for one player (for example, a black and a colour other than the black) different from that of a die for the other player, making a size and a font of spots of a die for one player different from that of a die for the other player, making a surface reflectance of a die for one player different from that of a die for the other player, making a material (ivory, plastic, lumber, metal or the like) of a die for one player different from that of a die for the other player, or making the contrast of a die for one player different from that of a die for the other player. It is noted that if the boundary of a die can be detected, the die can be identified by image-recognizing the size (boundary) of the die.

Alternatively, each die can be recognized by providing recognition functions, such as coating a die with fluorescent paint having a different light-emitting colour, providing a battery-less type of oscillating circuit inside the dice and supplying power thereto by radio induction to generate an electric signal with a specified wavelength, mutually making light reflectance of surfaces of a die different from that of another die, and making spots different for each die, such as the spots displayed by points, numerals, Roman numerals, picture characters, or the like.

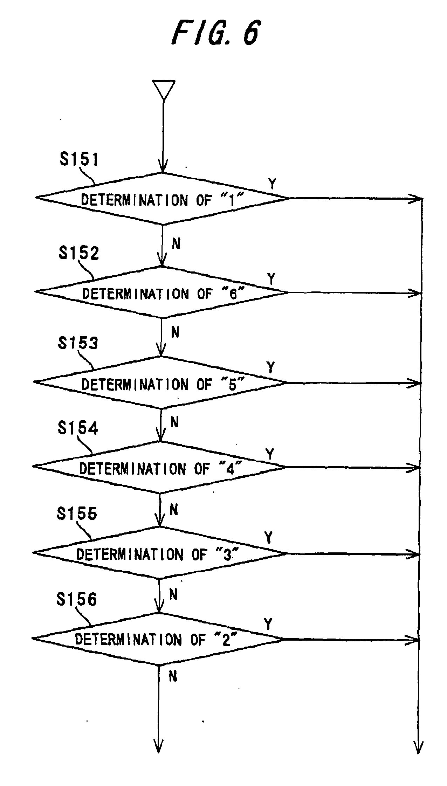

When a player is identified at S**104**, the image captured at the image-capture section **1** is analyzed to determine which spot number of **"1" - "6"** is the spot number of the die, and the determination process (to be explained in relation to **FIG. 6**) will be performed (S**106**). If faces of the dice are dirty, sufficient illumination is not obtained, or the paint of a spot separates, it tends to become difficult to determine the spot number. Accordingly it is checked whether or not the determination can be made (S**107**). When the determination is not made, the game does not proceed. In such a case, throwing a die or dice once more is required.

If the spot number determination is confirmed at S**107**, the processing goes back to S**106** for confirming dice spot number determination processing and determinations with respect to all the dice. If the impossibility of the dice spot number determination occurs even in one out of a plurality of dice, throwing a die or both dice again is demanded. Throwing only dice which cannot be determined may be demanded.

On the other hand, in case plural kinds of dice are determined to exist in the box **11**, each dice is selected for each kind thereof based upon feature information in advance registered with respect to each die (S**105**), and a player is identified for each kind of die (S**109**). The processing S**105** and the processing S**109** may be performed at the same time. Identification of a player is performed in such a way that a difference in colour (colour of an entire dice, colour of spots or the like), a size, a display content (font) of a surface, a shape (round, angular or the like), or a material (ivory, plastic, lumber, metal or the like) between dice is determined based upon the image contents, and the resultant determination of the dice is compared with the corresponding features of the dice for each player registered beforehand. If a player is not identified because of no prior registration, the processing goes to S105, wherein a message "the processing cannot proceed" and a message "recommend a registration of a player" are displayed (this is not shown in the figures).

Herein a player "A" and a player "B" are assumed to be identified. First a spot number determination of one die out of a plurality of dice with respect to the player "A" is made (S**110**). It is confirmed whether or not this spot number determination is achieved properly (S**111**). If the spot number determination is achieved properly, a spot number determination for the next die is made (S**112**). Namely the processing goes back to S**110**, and then the processing of S**110** - S**112** is performed repeatedly.

When the spot number determinations with respect to all dice for the player "A" are finished, next a spot number determination of one die out of a plurality of dice with respect to the player "B" is made (S**113**). It is confirmed whether or not this spot number determination is achieved properly (S**114**). If the spot number determination is achieved properly, the spot number determinations for all the other dice will be performed until the last one is finished (S**115**). If the spot number determination is not confirmed at S114, an error is determined (S**119**), whereby a displayed or voice message "recommend a player to throw dice again" (S**120**) is outputted.

When the spot number determinations with respect to all the dic e the player "A" and the player "B" have thrown are finished, and when the processing at S**108** is finished, the processing goes to S**116**, wherein the spot number of each die for each player or a sum of the numbers of the spots of the plurality of the dice is displayed on the display section **7**. And the above finish is also announced as a voice message. Further, the spot number for each player is reflected in a game (S**116**). After this processing, it is determined whether or not the power has switched off (S**117**) and when the power continues to be on, it is determined whether or not the reset switch **13** is operated (S**118**). When the reset switch **13** is operated, the processing goes back to S101, and then the subsequent processing is performed repeatedly.

When a failure of the spot number determination is confirmed at S**111** (and S107), an error is determined (S**119**), whereby a message "recommend a player to throw a die again" is outputted/displayed on the display section **7** (or by voice synthesis). When a player who has looked at this display or has heard the audio guide pushes the reset button **13** (S**118**), the processing is returned back to S**101**, and then the subsequent processing will be performed repeatedly. It is noted that in the case of throwing a die again, an operation of the reset switch button **13** is the condition for the throwing, but the reset may be automatically performed by image-recognizing the presence of a player's hand inside the box **11.**

As described above, according to the first preferred embodiment, not only when a plurality of players play a game by throwing a plurality of dice in order, but also when a plurality of players throw a plurality of dice at a time, each die is automatically identified and further, the spot number can be automatically determined by associating each player with the die used. Accordingly if the first preferred embodiment is applied to a sugoroku game, a horse race game, or a game in which a piece is advanced in accordance with a die spot number, since each player is not re quired to judge the die spot number on his or her own, each player can focus on the game.

It is noted that in **FIG. 4,** the processing of a game by two players in view of a limited space is shown, but the first preferred embodiment can be applied to any number of players. In this case, the number of the processing of S110 - S112 may increase corresponding to the number of players.

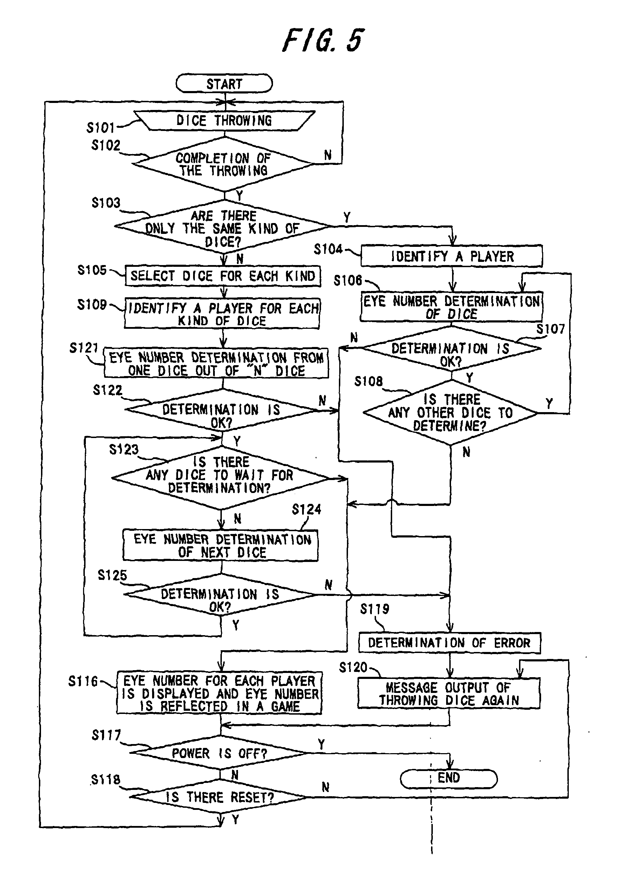

**FIG. 5** shows another processing example in the first preferred embodiment. In **FIG. 5,** the processing at S**101** - S**109,** and at S**116** - S**120** is the same as in **FIG. 4.** Accordingly explanation with respect to these identical steps is omitted. In **FIG. 4,** after associating each dice with a player, a dice spot number determination is made for each player. On the other hand, the processing in **FIG. 5** is characterized in that when the process of associating each die with a player is finished, the spot number determinations are made for all the dice indiscriminatingly in the order of the scanning.

When the dice of each kind are selected at S**105**, thereby a player is identified for each kind of dice (S**109**). Accordingly the spot numbers of from one die to N dice out of N numbers of dice are determined in order (S**121**). For example, the dice spot number determinations are made in the order in which the dice exist from a starting point of a sub-scanning direction of the image obtained by the image-capture section **1** to a finish point thereof.

With respect to the order of the dice in this case, the dice for different players are grouped irregularly. However, since it is all right only to recognize two aspects, that is, who the dice belong to, and what is the spot number of each dice, determining the spot number at a time results in no problem.

First, after the spot number determination for the fi rst die is made, it is confirmed whether or not the spot number determination is finished properly (S**122**). The purpose of performing this determination is the same as at S**107**. Namely, this determination is made since if the face of the dice is dirty, sufficient illumination is not obtained, or the paint of the spot separates, the recognition of the spot is not possible.

If the spot number determination is not made, an error is determined (S**119**). On the other hand, if it is confirmed that the spot number determination is made, it is determined whether or not another die waiting for a spot number determination exists (S**123**).

When the next die exists, the spot number determination is performed (S**124**). It is confirmed whether or not the spot number determination for this next die is finished properly (S**125**). When the spot number determination is not made, an error is determined (S**119**), and on the other hand, when it is confirmed that the spot number determination is made, the processing goes back to S**123**, wherein further, it is checked whether or not the next die waiting for the spot number determination exists. In case the die waiting for the determination exists, the spot number determination for the die is made. This routine will continue to be performed to the last die. When it is determined that there is no die for which to determine a spot number at S**123**, the processing goes to S**116**, wherein the spot number of each dice for each player or a sum of the numbers of the spots of the plurality of the dice for each player is displayed on the display section **7**. The above finish is also announced in voice synthesis. Further, the spot number for each player is reflected in a game. After this processing, it is determined whether or not the power has been switched off (S**117**) and when the power continues to be on, it is determined whether or not the reset switch **13** is operated (S**118**). When the reset switch **13** is operated, the processing goes back to S**101**, and then the subsequent processing is performed repeatedly.

It is noted that in **FIG. 5**, it is explained that after the plurality of the dice are identified for each player, the spot number determination is performed for all the dice at a time in the order of the players, but the processing of the spot number determination for each dice and the identification of the player may be performed simultaneously.

In **FIGS. 4** and **5**, it is explained that when a spot number determination failure is found for one die thrown, throwing a die again is required immediately after that. However, in case the spot number determinations with respect to the dice of the other players are performed properly, the processing after S**116** may proceed with respect to the dice of the players the spot number determinations of which have been performed properly. With respect to the dice of the players the spot number determinations of which have failed to be made, a message "appointing a player and throwing a dice again" may be made at S**120.**

**FIGS 4** and **5** show detail of the spot number determination.

The processing of spot number determinations comprises mainly two steps as described below. The first step is to extract spots (referred to as points in the figures) of the die from an image. The second step is to determine the spot number of the die from a location relation or the like of the extracted points. Namely, the spot number is determined based upon detection information such as a location relation, diameters or colours of the points. A die is usually expected to have a clear contrast in density (colour) between the face and the point (spot) of the die and therefore, the spot can be extracted based upon distribution and inclination of density values. Such processing enables the spot number determination even when the boundary between the dice closely placed is not distinct due to low resolution caused by low contrast in brightness or colour between the face of the dice and the background thereof.

**FIG. 6** shows detail of the spot number determination processing of S**106,** S**110** and S**113** in **FIG. 4,** and detail of the spot number determination processing of S**106** and S**121** in **FIG. 5**. It is noted that if two or more dice exist in the box **11,** in particular if two or more dice of the same kind exist, a plurality of dice are collected and neighbouring spots are combined, whereby a false spot number is formed (for example, two dice respectively show "**2**" as the spot number at the same time to form "**4**" as a false spot number, or respectively show "**3**" at the same time to form "**6**" as a false spot number). These spots are possibly image-recognized as a spot number as one die. With respect to such rare case, a more complicated processing is necessary, which will be explained later.

The dice spot number determination of **FIG. 6** is performed by the CPU **3** based upon the image captured by the image-capture section **1**. The spot number determination is performed for finding which one out of the numerals "**1**" - **6**" is the spot number for the die. The determination may be performed in no particular order, but the inventors have found that as shown in **FIG. 6,** it is most efficient to determine the spot number of "**1**" first and thereafter the other spot numbers in order of "**6**", "**5**", "**4**", "**3**", and "**2**".

Thus the spot number "**1**" is determined first and then is excluded before determination of other spot numbers is made. Excluding the point as the spot number "**1**" first prevents the point showing the spot number "**1**" from being recognized as a part of a pattern of another spot number in error. A die available in the market has the feature that the point of the spot number "**1**" is larger in size than the points of the spots of the other spot numbers, and is coloured red. Accordingly when the red colour is included in the image-capture information by the image-capture section **1**, it is determined immediately that the spot number of the die is "**1**" (S**151**).

Since there is no unified die standard in the industry, there may be slight differences in the outer size of the dice or a spot size of the dice between manufacturers. The spot "**1**" may also be coloured black. Therefore, the spot number "**1**" may need to be determined based on other than colours. For example, if the spot "**1**" is black and the size of the die is limited to a certain degree, the spot number "**1**" is determined not based upon the colour of the spot but based upon a diameter of the spot, or the spot number is determined as "**1**" if the distance of the spot to the nearest spot is longer than one section out of the four sections of the dice.

When the spot number "1" is determined, the processing of S116 in FIG. 4 or FIG. 5 is performed and when the spot number "1" is not determined, a determination of the spot number "6" is made (S152). If the spot number "6" is determined, the processing of S116 in FIG. 4 or FIG. 5 is performed after a predetermined processing. If the spot number "6" is not determined, a determination of the spot number "5" is made (S153). The spot numbers "4", "3", and "2" are determined in order in the same way as the above (S154, S155, and S156). If the spot number is not determined even in S156, it is possible not to obtain clear images because of problems with the location of the box 11, stop positions of the dice 14, 15, illumination conditions, or the like. Accordingly, an error determination is made (S119) and a message to roll a die once more is displayed or outputted as a voice (S106).

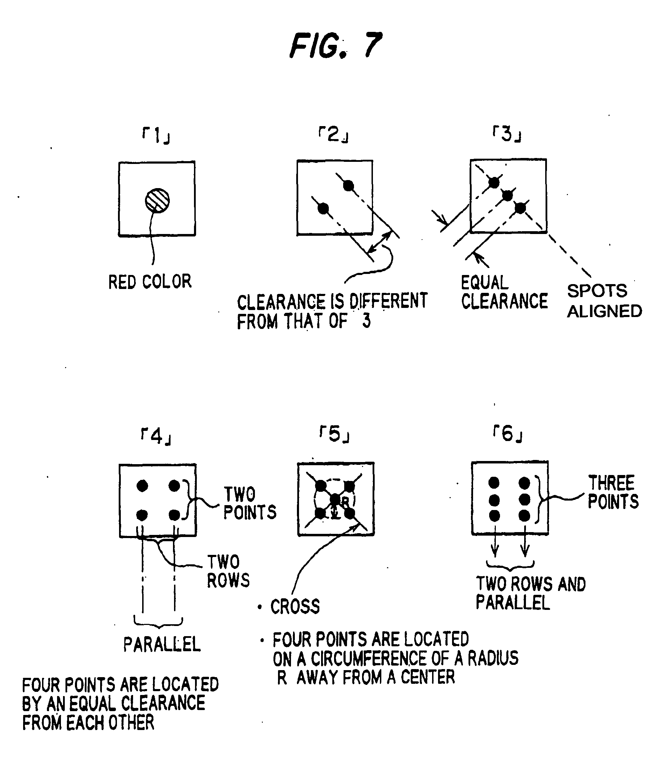

FIG. 7 shows feature items of each spot as factors for determining the spot numbers "1" - "6" for the dice. Each spot can be distinguished using the featuring items to determine the spot number. As shown in FIG. 7, the one spot as the spot number "1" may be different from the spots of the other spot numbers and have the feature in colour (red circle or the like) or in size (a diameter thereof is greater than that of the spots of the other spot numbers). The spacing between the spots of "2" is different from the spacing between the spots of "3". The spot number "4" has two rows of two points, which are parallel with each other. The spot number "5" has five points located on the face to form the cross, and also the four points are located on a circumference of the same radius away from the centre spot. Further, the spot number "6" has two rows of three points, and the two rows are parallel. The proc essing as explained below is performed based upon such features with regard to the locations of the respective spots of the die.

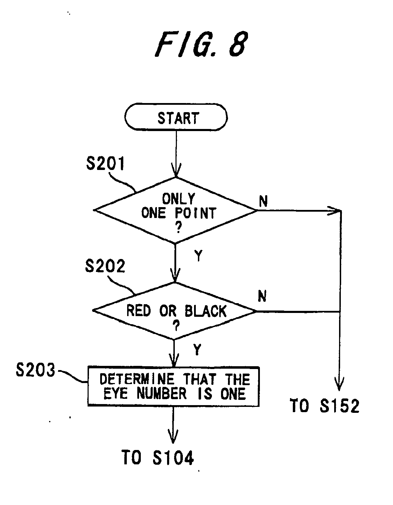

FIG. 8 shows detail of the processing of S151. When it is determined that the spot of the die is one red point or one black point (S201, S202), it is determined that the spot number is "1" (S203) and thereafter, the processing goes to S116 in FIG. 4 or FIG. 5. When it is not determined that the spot number is "1", the processing goes to a determination processing for a spot number "6".

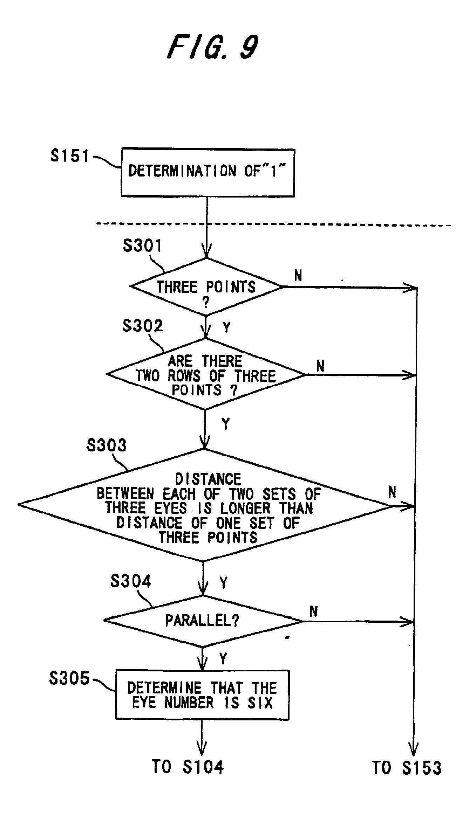

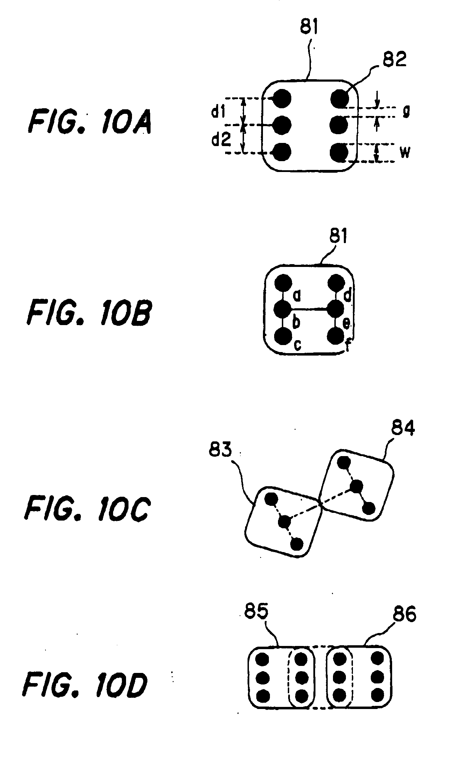

FIG. 9 shows determination processing of the spot number "6". FIGS. 10A, 10B, 10C and 10D show a detailed location of each point of the spot number "6". In the spot number "6" as shown in FIGS. 7 and 10 A, 10B, 10C and 10D, three points are closely in a line and two sets of the three points are located in two rows. As shown in FIG. 10C, there is a possibility that the spot numbers of two dice 83, 84 are both "3" and the two dice are closely in a line. In this case, whether or not a distance be tween each three spots of one die and each corresponding three spots of the other die is shorter than a length of the one set (the length formed by three points) is set as a determination condition.

If the two dice 85, 86 are arranged side-by-side, each showing the spot number "6" as shown in FIG. 10D, it is possible that three points of the one die and the neighbouring three points of the other die are recognized to be the spot number "6" in error. In order to avoid such erroneous recognition, the sets of the three points captures are not set at random, but set for example in order from the left to the right and thereafter, the other points in the right and the left direction are determined.

With regard to the condition in order that a set of three poin ts is determined to be "6" as the spot number, as shown in FIG. 10A, three points 82 of the dice 81 are in a line and a distance "d1" between the one and the centre point is equal to a distance "d2" between the other and the centre point (d1 is nearly equal to d2), and also the three points are very closely positioned. A clearance "g" between a point and a point is usually small than a diameter "w" of the point (g<w) and each of the distance "d1" and the distance "d2" is less than twice the diameter of the point (a distance "d" of the dice available in the market is mostly approximately 1.74 w).

Next a determination processing of the spot number "6" will be explained with reference to FIG. 9.

First, it is determined whether or not three points exist (S301) and next it is determined whether or not two sets of the three points are located in two rows (S302), and then it is determined whether or not the distance between each of the three points is longer than a length of one set formed with the three points (S303). Further, it is determined whether or not the two rows are in parallel and also in the square state (S304).

In detail, as shown in FIG. 10B, it is determined whether or not the line of the points "a" - "c" is parallel to the line of the points "d" - "f", as well as the line of the points "a" - "c" (or "d" - "f") is substantially normal to the line of the points "b" - "e" (or, the points "a" - "d" or the points "c" - "f"). Alternatively, it may be determined whether or not the line of the points "a" - "c" is the same in length as the line of the points "d" - "f", and it is determined whether or not the line of the points "b" - "e" is longer than the line of the points "a" - "c" or the line of the points "d" - "f" so that a state where two dice each having the spot number "3" are placed parallel to each other is not recognized in error to be the spot number "6". If the line of the points "b" - "e" is longer than the line of the points "a" - "c" or the line of the points "d" - "f", it is determined that the spot number is not "6". It is noted that the line of the points "a" - "c" or the like indicates a distance or a length between two points ("a" and "c").

FIG. 10D shows a case where two dice 85, 86, each having the spot number "6" are adjacent and also aligned in the same direction. In this case it is possible to recognize the spot number "6" with a combination of three points of one dice and three points of the other dice. Accordingly, in coping with this problem, sets of three points captured a re set not at random, but in order from the right to the left.

According to the determination processing described above, the spot number "6" can be recognized. If the determination of the spot number "6" is made prior to determination of the other spot numbers, loads in the subsequent determination processing are reduced, which enables an earlier finish of an entire determination processing.

If the above three conditions are cleared, the spot number "6" is determined (S**305**), the processing goes to S**116** in **FIG. 4** or **FIG. 5** after a predetermined processing. If even one of the three conditions is not cleared, the spot number "6" is not determined and the processing goes to S**119** in **FIG. 4** or **FIG. 5**. The earlier determination of the spot number "6" in **FIG. 7** brings a reduction of loads in subsequent processing, thereby to provide earlier finish of an entire processing in **FIG. 4.**

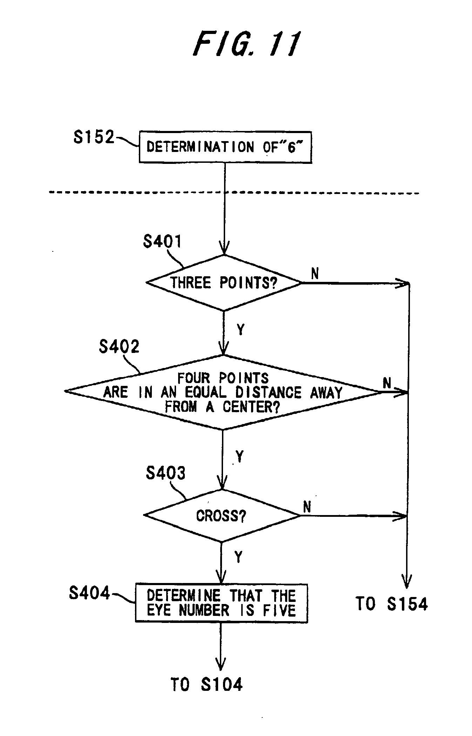

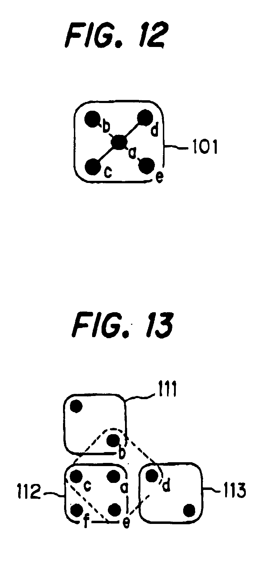

**FIG. 11** shows a determination processing of the spot number "5". **FIG. 12** shows a location of the spots of the spot number "5". In the spots of the spot number "5", as shown in a die **101** in **FIGS 7** and **12**, four black points are located on the four corners of a square and one black point is located in the centre thereof. In other words, since the black points are located in the shape of a cross, it is determined that the spot number is "5". According to further consideration, in the spot number "5", four black spots surrounding the black point in the centre are the same distance therefrom. Accordingly it is the condition for the determination of the spot number "5" whether or not the black points are located in the shape of the cross and the four black points are located the same distance away from the centre.

First, it is determined whether or not the number of black points is three points (S**401**). This processing is because of recognition for the centre of the cross. If three black points exist, it is determined whether or not four black points are located in the same distance away from the centre of the three points (S**402**). Next, if four black points exist the same distance away from the centre, it is determined whether or not the black points are located in the shape of the cross (at right angles) as a whole(S**403**).

Thus, the spot number "5" is determined based upon whether or not five points shown in **FIG. 12** have the relation as shown below.

$$\left| \,\text{"a" - "b"}\, \right| \;\approx\; \left| \,\text{"a" - "c"}\, \right| \;\approx\; \left| \,\text{"a" - "d"}\, \right| \;\approx\; \left| \,\text{"a" - "e"}\, \right| \quad \text{(equal clearance)}$$

$$\left(\text{"b" - "e"} \cdot \text{"c" - "d"}\right) / \left( \left| \,\text{"b" - "e"}\, \right| \cdot \left| \,\text{"c" - "d"}\, \right| \right) \;\approx\; \mathbf{0} \;\text{(vertical crossing)}$$

If the above condition is cleared, it is determined that the spot number is "5" (S**404**), and the processing goes to S**116** in **FIG. 4** or **FIG. 5**. If even one of the three conditions is not cleared, it is not determined that the spot number is "5", and the processing goes to S**119** in **FIG. 4**. It is noted that the determination of the spot number "5" is made based upon the condition that any point of the five points does not have the feature of the point as the spot number "**1**". However, if the determination of the spot number "**1**" is, as shown in **FIG. 6**, made before the determination processing of the spot number "5", the processing of this confirmation is not necessary.

**FIG. 13** shows a case where three dice **111, 112**, and **113** stop in a collective state, as well as the spot numbers thereof become respectively "**2**", "**2**", and "**4**". In this case the spot number "5" is formed in the centre of the three dice as shown in a dotted line. The processing of this case wi II be explained as below.

Since a spot number pattern of "**5**" in this case is larger in size than an actual die, it can be determined that the spot number is not "**5**", and this pattern can be excluded from the determination results. It is noted that there is a method of determining that the spot number is not "**5**" based upon conditions other than the size of the die. Namely it is determined based upon whether or not a point "f" forming a part of a spot number pattern of "**4**" exists in the vicinity of the die **112** having the points "a", "c", and "e" of the spot number "**5**".

If the point "f" is found, it is assumed that the spot number shown in a dotted line by the five points "a", "b", "c", "d", and "e" is not "**5**". The reason is that if the points "a", "b", "c", "d", and "e" are the points of the spot number "**5**" of the die, the point "f" does not come close to the dotted line showing the border. The inventors have confirmed that this respect is correct by checking various kinds of dice available in the market.

It will be confirmed by the above similar method whether or not another point (for example, the point "X") having the feature similar to the point "f" exists in the other three spot number patterns of the points "a", "b", and "c", the points "a", "b", and "d", and the points "a", "b", and "e". For example, whether or not the point "X" is paired to the points "a", "c", and "e" to form the spot number pattern of "**4**" can be determined based upon whether or not a set of the points "a" - "x" is substantially as long as a set of the points "c" - "e", and also each set is crossed in the vicinity of respective centres.

The spot number "**5**" can be recognized by the determination processing described above. An earlier determination of the spot number "**5**" causes easier processing of subsequent other spot number determinations to shorten the finish time of the entire processing. The spot number determination of "**5**" can be incorporated in a method of "the processing starts with an end point" described later. In this case, with no possibility of erroneous recognition of the spot number "**4**" of the dice, the determination processing of the spot number "**5**" becomes simple.

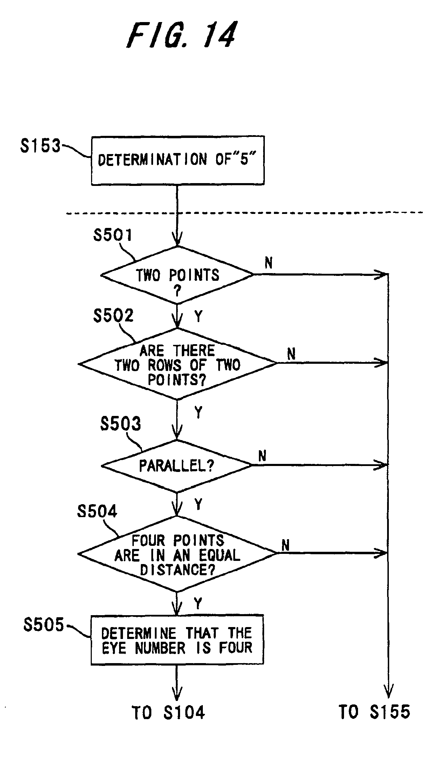

**FIG. 14** shows determination processing of the spot number "**4**". In the spot number "**4**", as shown in **FIG. 7**, four black points are squarely arranged. Accordingly, when the four black points exist, the spot number " **4**" is nearly determined. According to further consideration, if in four points, two lines, each connecting two black points, are respectively crossed perpendicularly, and each line has substantially the same and appropriate length, and the crossing point of the two lines is in the vicinity of the respective centres, it is found that the spot number is "**4**". There is a possibility that two points of each of the two dice come close to seemingly form the spots "**4**". Accordingly whether or not the four black points are located in an equal distance is also included in the determination condition.

First, it is determined whether or not the number of the spots of the die is two points (S**501**). Next, it is determined whether or not there are two rows of two points (S**502**). The four points to show the spot number "**4**" are recognized based upon this determination. Next, it is determined whether or not two rows of the two points are parallel (S**503**), and further, it is determined whether or not each of four points is mutually in an equal distance from two points adjacent thereto (S**504**). When each condition described above is cleared, it is determined that the spot number is "**4**" (S**505**), the processing goes to S**116** in **FIG. 4** or **FIG. 5** after a predetermined processing. On the other hand, when even one of the four conditions is not cleared, it is not determined that the spot number is "**4**", and the processing goes to **S119** in **FIG. 4** or **FIG. 5.**

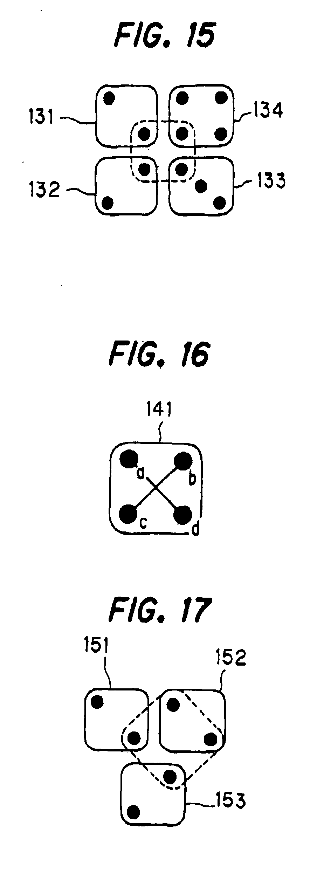

**FIG. 15** shows a case where a plurality of dice are rolled to be placed in a collective state to form the spot number "**4**" in the centre. As an example to form such spot number pattern, there is a case four dice **131, 132, 133**, and **134** are located in a collective state to form a square as a whole, and the respective spot numbers are shown as "**2**", "**2**", "**3**", and "**4**". In this case the spot number "**4**" is formed in the centre as shown in dotted line. Since in this case, not only the spot number "**4**" but also the other spot number patterns such as the spot numbers "**2**", and "**3**" are possibly determined, the spot numbers cannot be simply determined unlike the spot number "**6**" or "**5**" described above.

Therefore, based upon a point in the outmost end in an image, a spot number of a die including the point of the outmost end is processed by a method explained below. This processing will be repeated by setting the point existing in the outmost end in the image as a base in order until any unprocessed point does not exist. This allows the spot numbers "**4**" - "**2**" to be determined. It is noted that in the process of performing this processing, it is possible to make the determination of the spot numbers "**1**", "**5**", and "**6**". This processing will be explained in detail later.

This processing determines, in order based upon the point (unprocessed end point) existing in the outmost end in an image, that the spot number is "**1**", "**6**", "**5**", "**4**", "**3**", or "**2**". For example, a distance between the points is used for identifying the point in the outmost end in the image (first unprocessed end point). Since two points having the longest distance therebetween in the image are the points positioned in the outmost end in the image, it is all right only if the respective two points or either one of the two are processed. When the spot number with regard to points including a point (first unprocessed end point) existing in the outmost e nd in the image is determined and its processing is finished, the near unprocessed point is set as an unprocessed end point (second unprocessed end point) and will be processed in order.

First, if the end point unprocessed in the image has the feature of the point as the spot number "**1**" described above, the spot number is determined/confirmed as "**1**".

If recognition of the spot number "**1**" is finished, it is not necessary to determine a determination of the spot number "**1**" newly.

Next, it will be determined whether or not the spot number is "**6**". If the end spot unprocessed in the image is a part of the spot number "**6**", that part is the end point in the three points closely placed in series in the spot number pattern of "**6**", and a point closest to the end point is a central point of the three points. If the above spot number pattern of "**6**" corresponds to this state the spot number is determined to be "**6**". It is noted that herein it is not necessary to consider the false spot number pattern "**6**" as shown in **FIG. 10**D. In this case, if the recognition of "**6**" is finished, it is not necessary to perform the determination of "**6**" again.

Next, following the determination of whether or not the spot number is "**6**", it will be determined whether or not the spot number is "**5**." If the end point unprocessed in the image is a part of the spot number "**5**," the end point is any one of four points other than the central point out of the pattern of "**5**," and the point closest to the end point is the central point of the pattern "**5**". If the pattern of "**5**" corresponds to this condition, the spot number "**5**" can be determined. In this case, consideration of the false spot number pattern "**5**" as shown in **FIG. 13** is not necessary, and a limit to a clearance between points may be set in accordance with a size of the dice. In this case, if the recognition of the spot number "**5**" is finished, it is not necessary to perform a determination of the spot number "**5**" again.

Next, it is determined whether or not the spot number is "**4**". If the end point "a" unprocessed, as well as the points "b", "c", and "d" forming the spot number pattern "**4**" exist in the image, the point "a" is a part of the spots of the spot number "**4**" or "**5**". However, it is the condition that any point does not have the feature of the point as the spot of the spot number "**1**". It is noted that if the determination of "**1**" is determined in advance, this determination is not necessary.

**FIG. 16** shows the spot location of the spot number pattern "**4**". In **FIG. 14**, whether or not four points of the dice **141** show the spot number pattern "**4**" can be determined based upon the following equation.

Condition **1**:

$$\left|\ \text{"a" - "d"}\ \right|\ \approx\ \left|\ \text{"b" - "c"}\ \right|$$

Condition **1**:

$$(\text{"a" - "d"} \cdot \text{"b" - "c"}) / (\left|\ \text{"a" - "d"}\ \right| \cdot \left|\ \text{"b" - "c"}\ \right|)\ \approx\ \mathbf{0}\ (\text{vertical crossing})$$

Condition **3**: A line component "ad" and a line component "bc" are crossed respectively in the vicinity of the centre of each line.

Further, it is predicted that a plurality of dice are collected to form the spot number "**4**".

**FIG. 17** shows a case where three dice, each having the sp ot number "**2**", are collected to form the false spot number pattern "**4**". In order to exclude the false spot number "**4**" being determined in such case, a limit to a clearance between points is required to be set in accordance with the size of the dice. For example, a size of the dice used may be restricted to define a certain value to the limit or the limit may be changed based upon a diameter or the like of the point (spot).

If the points "a", "b", "c", and "d" meet the above conditions **1** - **3**, the points "a", "b", "c" and "d" can be assumed to be a part of the spot number "**4**" or "**5**". Accordingly If it will be determined whether or not the spot number is "**4**" after it is determined whether or not the end point "a" is a part of the spot number "**5**", since at this timing the spot number is never "**5**", it can be determined immediately that the points "a", "b", "c" and "d" is the part of the spot number "**4**". Alternatively, it may be checked whether or not another point exists inside the points "a", "b", "c" and "d ".

When the end point "a" unprocessed in the image does not correspond to anyone of the determination conditions of the above-mentioned spot numbers "**6**", "**5**", and "**4**", the spot number may be assumed to be the spot number "**3**" or "**2**". Thus, if a point forming the spot number pattern "**3**" together with the end point "a" and the point "b" closest to the end point "a" exists, the points "a", "b", and "c" are a part of the spot number "**3**".

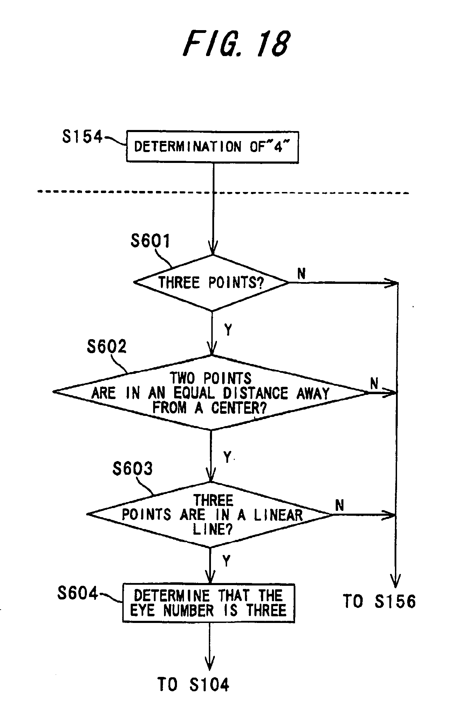

**FIG. 18** shows a determination processing of the spot number "**3**".

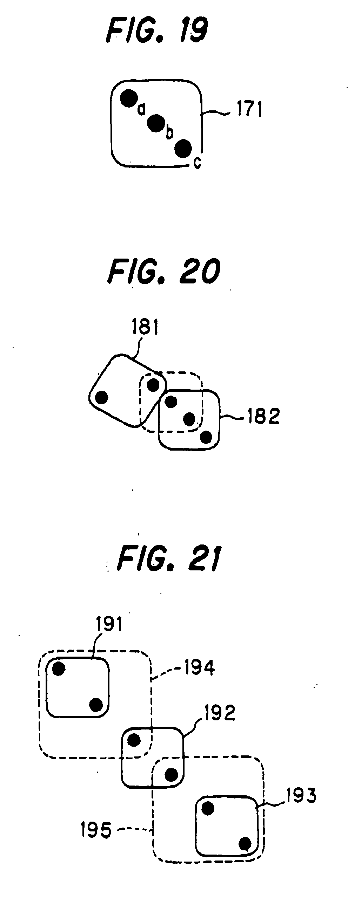

**FIG. 19** shows a point (spot) location of the spot number pattern "**3**". In **FIG. 19**, whether or not three points "a", "b", and "c" of the dice **171** show the spot number pattern "**3**" can be determined based upon the following conditions. The spot number "**3**" of the die **171**, as shown in **FIG. 7**, is a pattern where three black points are arrayed. Accordingly if the two points exist in an equal distance away from the centre and in a linear line, the spot number "**3**" can be determined. Namely when the following two co nditions are met, the spot number "**3**" can be determined.

Condition **1**:

$$\left|\ \text{"a" - "b"}\ \right|\ \approx\ \left|\ \text{"b" - "c"}\right|\ (\text{equal clearance})$$

Condition **2** :

$$(\text{"a" - "b"} \cdot \text{"b" - "c"}) / (\left|\ \text{"a" - "b"}\ \right| \cdot \left|\ \text{"b" - "c"}\ \right|)\ \approx 1\ (\text{series})$$

The determination processing of the spot number "**3**" will be explained with reference to **FIG. 18**. First, it is determined whether or not the number of black points is three points (S**601**). Only this determination does not enable distinction to three points lined obliquely in the spot number "**5**". Accordingly it is determined whether or not two black points are located in the same distance away from the centre of the three points (S**602**). Next, If two black points exist in the same distance away from the centre, it is determined whether or not the three black points including the two black points are located in a linear line (S**603**).

If the above conditions are cleared, it is determined the spot number is "**3**" (S**604**), the processing goes to S**116** in **FIG. 4** or **FIG. 5**. If even one of the three conditions is not cleared, it is not determined that the spot number is "**3**", and the processing goes to S**119** in **FIG. 4** or **FIG. 5** after a predetermined processing.

**FIG. 20** shows a case where two dice **181, 182** are located in a collective state and three spots are formed in the contacting portion between the two dice. If the spot number of the dice **181** is "**2**" and the spot number of the dice **182** is "**3**", the spots of the spot number "**3**" are formed by two points of the die **182** and one point of the die **181**. The processing to prevent the spots "**3**" in this state from being determined as the spot number "**3**" in error is the same as in the case in **FIG. 15** and consideration is paid to the point positioned in the outmost end in the image, which may be processed using the distance between the points.

If the point to meet the two determination conditions of the spot number "**3**" does not exist, two points "a", "b" are determined as the points of the spot number "**2**". However, for determinations of the spot numbers "**3**" and "**2**", it is the condition that any one of the points does not have the feature of the point as the spot number "**1**". It is noted that when it is already determined that the spot number is "**1**", this determination is not necessary.

**FIG. 21** shows a case where when three dice are collected, the spot numbers "**2**" and "**3**" are formed depending on the location relation of the three dice. For example, if six points of three dice **191, 192, 193**, each having the spot number "**2**", are located in a linear line, two sets of the spot number "**3**" shown in a dotted line frame and one set of the spot number "**2**" of the dice **192** between the two sets tend to exist in the linear line. Namely false spot numbers **194, 195** tend to be generated. However, the false spot numbers can be distinct based upon a clearance between the points. An allowable range of the clearance between the points may be dynamically defined by limiting the size of the dice or based upon a diameter or the like of the point.

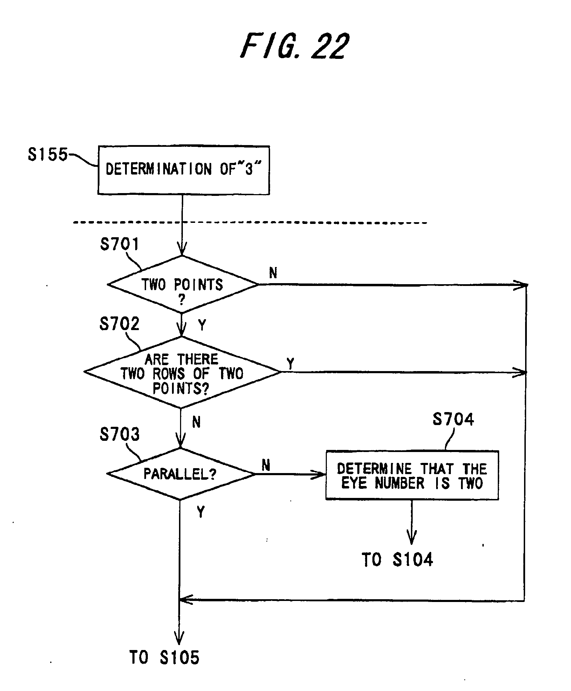

**FIG. 22** shows a determination processing of the spot number "**2**". The spots of the spot number "**2**" of the dice, as shown in **FIG. 7**, has two spots. The spot number "**2**" is determined as "**2**" based upon whether two black points are in a line, as well as the spot number "**2**" is not a square shape (distinction to the spot number "**4**" is possible by this). However, an erroneous recognition with regard to the spot numbers "**2**", "**3**" possibly occurs depending on the location relation, and the erroneous recognition can be avoided based upon the clearance between the points.

First, it is determined whether or not the number of the spots of the dice is two points (S**701**). Next, the spot number is determined as "**2**" (S**704**) based upon a state where two points are not formed by two rows of one point and two rows of two points are not parallel unlike the spot number "**4**" (S**702**, S**703**), and then the processing goes to S**116** in **FIG. 4** or **FIG. 5**. When even one of the determinations of S**701** - S**703** is not cleared, it is not determined that the spot number is "**2**", and the processing goes to S**119** in **FIG. 4** or **FIG. 5**.

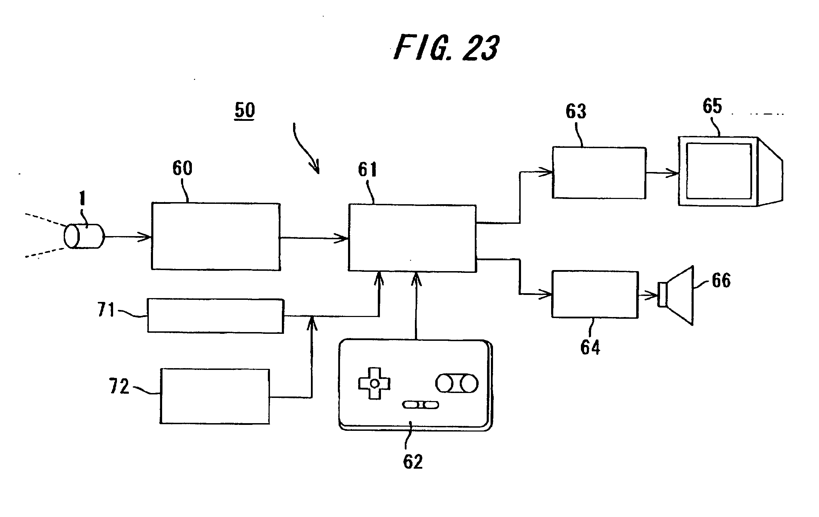

**FIG. 23** shows a game apparatus in a second preferred embodiment according to the present invention. This game apparatus comprises the dice spot number determination apparatus **10** and an image-capture section as shown in any of **FIGS. 1** to **3**, and is suitable for a game such as a sugoroku game, a horse race game or a game in which a piece is advanced in accordance with a die spot number, and more particularly for a game which a plurality of players play. As the number of players increases, this game apparatus is more effective.

The game apparatus **50** comprises a dice spot number determination section **60** having substantially the same components with the dice spot number determination apparatus **10**, a main body section **61** to which a cassette ROM **71** or a CD/DVD drive **72** is mounted, a controller **62** for games operated by a player, a display controller **63** for display control, a display **65** connected to the display controller **63**, an audio amplifier **64** connected to the main body section **61** to amplify voices, and a speaker **66** connected to the audio amplifier **64** to output voices.

The dice spot number determination section **60** is formed of the dice spot number determination apparatus **10** excluding the display control section **6**, the display section **7**, the audio processing section **8**, and the speaker **9** in **FIG. 1**. The excluded functions are performed by the display controller **63** connected to the main body section **61**, the display **65**, the audio amplifier **64**, and the speaker **66** as alternatives.

The main body section **61** is a computer comprising a CPU, a ROM, a RAM, a bus interface, an input/output interface, and power source section and is operated by programs stored in the ROM. The controller **62** for the game is operated by a player in playing a game, and is equipped with a function key, a cross key, and other keys and is connected to the main body section **61** through a cable. The display **65** may be formed of a CRT, a crystal display or the like.

Herein the display **65** is a display exclusively for games, but if the display **65** is connected to the main body section **61** through a converter converting a picture signal, a receiver for TV broadcasting may be used as a display. The main body section **61**, the display **65**, and the dice spot number determination section **60** are formed separately. However, these components and further the display controller **63**, the audio amplifier **64**, the display **65**, the speaker **66**, and the CD/DVD drive **72** housed in the display **65** may be integrally formed. Alternatively, the display **65** and the other components may be housed in the main body section **61** for integration.

In the case of using the game apparatus **50**, the use aspect may be provided such that game software using a die is actuated to be incorporated in the game or may be simply used as a die spot number determination/a display apparatus. When a player starts to play a game by mounting the cassette ROM **71** or by setting the CD/DVD for games to the CD/DVD drive **72**, the progress of the game is displayed from point to point. The game advances by operating the game controller **62** for the game. Voices in the game are outputted through the audio amplifier **64** from the speaker **66**.

If a game requires a die, a message is displayed on the display **65** in requiring the die (or voices are outputted). Accordingly when a player throws dice into the box **11** and rolls them, the spot number is read by the dice spot number determination apparatus **10**. The read contents are processed by the dice spot number determination section **60** as described above, and the determination information is sent to the main body section **61**. The main body section **61** displays the spot number on the display **65** through display controller **63**. The main body section **61** advances the game using the spot number. It is noted that the spot number of the dice can be automatically reflected in a game or can be manually inputted based upon a player's judgment.

On the other hand, in the case of using only functions of the dice spot number determination section **60**, the spot number determination result is processed independently of the game. Namely the main body section **61** executes only the processing to display the spot number determination result by the dice spot number determination section **60**.

As explained above, incorporation of the dice spot number determination section **60** into the game apparatus serving mainly functions as the game machine allows the spot number result of the dice to be reflected during game-playing, thereby shortening waiting time in a game.

The game apparatus **50** may be equipped with a function connected to the Internet (not shown in **FIG. 23**). Provision of this function allows a player to enjoy a game through the Internet without use of a cassette ROM, CD software, DVD software, and the like, and in addition, game software can be downloaded from the Internet.

In the above-mentioned preferred embodiments, the spot number determination is performed in order of "**1**", "**6**", "**5**", "**4**", "**3**", and "**2**". However, If only one die is used by one player, the determination of the spot number "**1**" is not necessarily performed first. The reason why the determination is performed in order from the large number to the small number (**"6"** ···· **"2"**) is that the processing for the small number of spots is easier by determining the larger spot numbers first, thereby to shorten the entire processing time. However, random order may be performed.

In the preferred embodiments, the dice are formed in a general square shape, but may be in a polygonal shape. If the dice are formed in a polygonal shape, the number of the spots, in addition of "**1**" - "**6**", may include "**7**" or more. In this case, corresponding sections in the processing shown above may be adopted and the processing program may be timely changed in accordance with the number of the spots.

Further, the present invention can be applied to a die with a spot in the shape of not only a point but also a diamond, a quadrangle or the like, or also to a die on which a number is described, such as "**1**", "**2**", ..., or to a dice on which a picture letter, a code or the like is displayed. In this case since the numbers are only recognized directly in place of image recognition of the points, the determination processing is simpler than the above-mentioned methods. The colour of the spot (point) is generally black in addition to red, but points in other colours may be used.

The box **11** is formed in a square, but may be in another shape, for example, a cylindrical shape, or an oval shape. Further, a shape of the component corresponding to the box is not limited to a box shape and in particular, in **FIG. 3**, the image-capture section may be formed by mounting a pole to a stand having a base of an L-letter shape or a reverse L-shape.

If the present invention is applied to a commercial product for school children, the appearance of the box may be arranged as that of a doll, an animal, a vehicle, a building or the like to establish a space at a part of the box for rolling a die.

In **FIG. 1**, the reset switch **13** and the determination switch **17** are disposed in the box **11**, but may be disposed in the main body housing the electronic circuits. If the program to actuate the reset at a certain cycle is incorporated in a ROM **4**, the reset switch **13** can be omitted.

If the spot of the spot number "**1**" is not red and is not a black point of a large size, it is difficult to determine the spot number "**1**". Accordingly, if a stick seal of a red point corresponding to the spot as the spot number "**1**" or a stick seal where a large black point is printed is enclosed/sold in selling a dice spot number determination apparatus **10**, the above problem is solved.

Further, it is explained that in the preferred embodiments it is difficult to individually identify a plurality of dice based upon a boundary of each dice. However, a band-like line in black or silver is in advance attached to a ridge portion of a dice, thereby to clearly define the boundary of the dice when captured by the image-capture section **1**. As a result, the boundary allows a size of the dice to be image-recognized, which can be used as the determination.

**Claims**

1. A dice spot number determination method, comprising the steps of:

providing plural kinds of dice (14, 15), each die having at least six faces, describing from one spot to at least six spots on each face, and each dice having a feature to identify a player (A, B) associated with each of the kinds of dice;

inputting the feature of the dice for each player by an inputting device (16) or by capturing the feature by an image-capture device (1);

recording the feature in a recording device;

capturing (S103) an image of at least one of an upper face or a lower face of each die to generate an image signal;

identifying (S104, S109) a player for each kind of the dice out of the plural kinds of the dice within the image of the captured face based upon the recorded feature and the image signal; and

determining (S106, S110) a spot number of each die of the plural kinds of the dice within the image of the captured face based upon the image signal;

wherein the spot described on each of the six faces is shown as at least one point and the spot number determination (S106, S110) is made based upon a determination condition of at least one of a feature of the at least one point, the number of the point(s), and a location state of the at least one point within a predetermined area of the image of the captured face; and

wherein the spot number determination first determines if the number of the point within the predetermined area of the image of the captured face is "**1**" and if not a determination of the spot numbers corresponding to "**6**" then "**5**" then "**4**" then "**3**" then "**2**" is made.

2. A method according to claim **1**, wherein:

the spot number determination (S106, S110) is performed for each player in order or the spot number determination is performed for each die in order from an edge of the image of the captured face with respect to the plurality of dice.

3. A method according to claim **1**, wherein the feature to identify the each player comprises:

a display format such as the colour, or the size or the font of spots of each of the plurality of dice (14, 15);

the material of each of the plurality of the dice; or

an identification function in advance provided in each of the plurality of dice.

4. A dice spot number determination apparatus (10), for use with plural kinds of dice (14, 15), each die having at least six faces and describing from one spot to at least six spots on each face, and having a feature to identify a player associated with each of the kinds of dice; the apparatus comprising:

an image-capture section (1) to capture an image of at least one of an upper face or a lower face of each die of the plural kinds of the dice (14, 15) to generate an image signal;

an input section to input the feature of the dice for each player, for identifying the player;

a recording section (5) to record the inputted feature;

a vessel (11) in which a space for rolling the plurality of the dice is defined and the image-capture section is located in a lower part or an upper part thereof;

a determination section (3) to identify the player for each of the kinds of dice (14, 15) within the image of the captured face based upon the recorded feature and the image signal and determine a spot number of each of the plurality of the dice within the image of the captured face based upon the image signal; and

an output section to display or output as a voice representation a determination result of the spot number for each player by the determination section as a numerical value or output the determination result as dice information for an electronic game;

wherein the spot described in each of the six faces is shown as at least one point and the determination section performs the spot number determination based upon a determination condition of at least one feature of the at least one point of each spot, the numbers of point(s), and a location state of the at least one point within a predetermined area of the image of the captured face; and

wherein the determination section first determines if the number of the point within the predetermined area of the image of the captured face is "**1**" and if not a determination of the spot numbers corresponding to "**6**"then "**5**" then "**4**" then "**3**" then "**2**" is performed.

5. Apparatus according to claim 4, wherein:

the determination section performs the spot number determination for each player in order or the determination section performs the spot number determination in order from an edge of the image of the captured face with respect to the plurality of dice.

6. Apparatus according to claim 4, wherein:

   the determination section identifies each player by the feature based upon a display format such as the colour, the size or the font of the spots of each of the plurality of the dice, the material of each of the plurality of the dice, or an identification function provided in advance for each of the plurality of dice.

7. A game apparatus, comprising the dice spot determination apparatus according to claim 4; and a control section programmed to:

   perform a game from a memory medium storing game software or a game provided by a connection to the Internet;
   display the image during performing the game on an internal or external display; and
   display on the display, output as a voice representation, or incorporate into the game as necessary a determination result with regard to the spot determination for each player obtained by the dice spot number determination section.


**Patentansprüche**

1. Verfahren zur Bestimmung der Augenzahl eines Würfels, das die Schritte umfaßt:

   Bereitstellen von mehreren Arten von Würfeln (14, 15), wobei jeder Würfel mindestens sechs Seiten aufweist, die von einem Punkt bis mindestens sechs Punkten auf jeder Seite aufweisen, wobei jeder Würfel ein Merkmal zum Identifizieren eines Spielers (A, B) aufweist, der mit jedem der Würfelarten verbunden ist,
   Eingeben des Merkmals des Würfels für jeden Spieler durch eine Eingabeeinrichtung (16) oder durch Erfassung des Merkmals durch eine Bilderfassungseinrichtung (1),
   Aufzeichnen des Merkmals in einer Aufzeichnungseinrichtung,
   Erfassen (S103) eines Bildes von mindestens einer Oberseite oder einer Unterseite von jedem Würfel zum Erzeugen eines Bildsignals,
   Identifizieren (S104, S109) eines Spielers für jede Art des Würfels aus der Vielzahl von Würfelarten innerhalb des Bildes der erfaßten Seite auf der Grundlage des aufgezeichneten Merkmals und des Bildsignals, und
   Bestimmen (S106, S110) einer Augenzahl jedes Würfels der Vielzahl von Würfelarten innerhalb des Bildes der erfaßten Seite auf der Grundlage des Bildsignals,
   wobei das auf jeder sechs Seiten enthaltene Würfelauge als mindestens ein Punkt dargestellt ist und die Augenzahlbestimmung (S106, S110) auf der Grundlage der Bestimmung des Zustands von mindestens einem Merkmal des mindestens einen Punktes, der Anzahl von Punkten oder des Orts des mindestens einen Punktes innerhalb eines vorab festgelegten Gebietes des Bildes der erfaßten Seite durchgeführt wird, und
   die Augenzahlbestimmung als erstes bestimmt, ob die Anzahl der Punkte innerhalb des vorab festgelegten Gebietes des Bildes der erfaßten Seite "1" beträgt, und falls nicht, eine Bestimmung der Augenzahl für "6", danach "5", danach "4", danach "3" und danach "2" durchgeführt wird.

2. Verfahren nach Anspruch 1, **dadurch gekennzeichnet, daß**

   die Augenzahlbestimmung (S106, S110) für jeden Spieler der Reihe nach durchgeführt wird oder die Augenzahlbestimmung für jeden Würfel der Reihe nach von einem Rand des Bildes der erfaßten Seite in Bezug auf die Vielzahl von Würfeln durchgeführt wird.

3. Verfahren nach Anspruch 1, **dadurch gekennzeichnet, daß** das Merkmal zum Identifizieren jedes Spielers umfaßt:

   ein Anzeigeformat, wie zum Beispiel die Farbe oder die Größe oder der Font von Würfelaugen von jedem der Vielzahl von Würfeln (14, 15),
   das Material von jedem der Vielzahl von Würfeln, oder
   eine Identifizierungsfunktion, die vorab in jedem der Vielzahl von Würfeln vorgesehen ist.

4. Anordnung (10) zur Bestimmung der Augenzahl eines Würfels, zur Verwendung mit mehreren Arten von Würfeln (14, 15), wobei jeder Würfel mindestens sechs Seiten aufweist und von einem Würfelauge bis mindestens sechs -Würfelaugen auf jeder Seite aufweist und ein Merkmal zum Identifizieren eines Spielers aufweist, der mit jedem der Würfelarten verbunden ist, wobei die Anordnung umfaßt:

einen Bilderfassungsabschnitt (1) zum Erfassen eines Bildes von mindestens einer Oberseite oder einer Unterseite von jedem Würfel der zahlreichen Arten von Würfeln (14, 15) zum Erzeugen eines Bildsignals,

einen Eingabeabschnitt zum Eingeben des Merkmals des Würfels für jeden Spieler zum Identifizieren des Spielers,

einen Aufzeichnungsabschnitt (5) zum Aufzeichnen des eingegebenen Merkmals,

einen Behälter (11), in dem ein Raum zum Rollen der Vielzahl von Würfeln gebildet wird und in dem der Bilderfassungsabschnitt in einem unteren Teil oder einem oberen Teil desselben angeordnet ist,

einen Bestimmungsabschnitt (3) zum Identifizieren des Spielers für jede Art von Würfel (14, 15) innerhalb des Bildes der erfaßten Seite auf der Grundlage des aufgezeichneten Merkmals und des Bildsignals und Bestimmen einer Augenzahl von jedem der Vielzahl von Würfeln innerhalb des Bildes der erfaßten Seite auf der Grundlage des Bildsignals, und

einen Ausgabeabschnitt zum Anzeigen oder Ausgeben als eine Sprachdarstellung des Ergebnisses der Bestimmung der Augenzahl für jeden Spieler durch den Bestimmungsabschnitt als einen numerischen Wert oder Ausgabe des Bestimmungsergebnisses als Würfelinformation für ein elektronisches Spiel,

wobei das in jeder der sechs Seiten enthaltene Würfelauge als mindestens ein Punkt gezeigt ist und der Bestimmungsabschnitt die Augenzahlbestimmung auf der Grundlage einer Bestimmung des Zustands von mindestens einem Merkmal des mindestens einen Punktes jedes Würfelauges, der Anzahl von Punkten oder eines Orts des mindestens eines Punktes innerhalb eines vorab festgelegten Gebietes des Bildes der erfaßten Seite durchführt, und

der Bestimmungsabschnitt als erstes bestimmt, ob die Anzahl der Punkte innerhalb des vorab festgelegten Gebietes des Bildes der erfaßten Seite "1" beträgt, und falls nicht, eine Bestimmung der Augenzahl für "6", danach "5", danach "4", danach "3" und danach "2" durchführt.

5. Anordnung nach Anspruch 4, **dadurch gekennzeichnet, daß** der Bestimmungsabschnitt die Augenzahlbestimmung für jeden Spieler der Reihe nach durchführt oder der Bestimmungsabschnitt die Augenzahlbestimmung der Reihe nach von einem Rand des Bildes der erfaßten Seite in Bezug auf die Vielzahl von Würfeln durchführt.

6. Anordnung nach Anspruch 4, **dadurch gekennzeichnet, daß** der Bestimmungsabschnitt jeden Spieler durch das Merkmal identifiziert, das auf der Grundlage eines Anzeigeformats, wie zum Beispiel der Farbe, der Größe oder des Fonts der Augenwürfel von jedem der Vielzahl von Würfeln, des Materials von jedem der Vielzahl von Würfeln oder einer Identifizierungsfunktion basiert, die im voraus für jeden der Vielzahl von Würfeln vorgesehen ist.

7. Spielgerät, umfassend die Anordnung zur Augenzahlbestimmung nach Anspruch 4 und

einen Steuerabschnitt, der programmiert ist, um
ein Spiel aus einem Speichermedium, das Spielesoftware speichert, oder ein Spiel durchzuführen, das durch eine Verbindung mit dem Internet bereitgestellt wird,
das Bild während der Durchführung des Spiels auf einem internen oder externen Display anzuzeigen, und
ein Bestimmungsergebnis bezüglich der Augenzahlbestimmung für jeden Spieler, das durch den Abschnitt zur Bestimmung der Würfelaugenzahl erhalten wurde, nach Bedarf auf dem Display anzuzeigen, als eine Sprachdarstellung auszugeben oder in das Spiel einfließen zu lassen.

## Revendications

1. Procédé de détermination du nombre de points sur un dé, comprenant les étapes consistant à :

prévoir une pluralité de sortes de dés (14, 15), chaque dé ayant au moins six faces, entre un point et au moins six points figurant sur chaque face, chaque dé ayant une caractéristique pour identifier un joueur (A, B) associé à chacune des sortes de dés ;
introduire la caractéristique du dé correspondant à chaque joueur, à l'aide d'un dispositif (16) d'entrée ou en capturant la caractéristique à l'aide d'un dispositif (1) de capture d'images ;
enregistrer la caractéristique dans un dispositif d'enregistrement ;
capturer (S103) une image d'au moins une face supérieure ou une face inférieure de chaque dé pour engendrer un signal d'image ;
identifier (S104, S109) un joueur pour chaque sorte de dé parmi la pluralité de sortes de dés à l'intérieur de l'image de la face capturée, sur la base de la caractéristique enregistrée et du signal d'image ; et
déterminer (S106, S110) un nombre de points sur chaque dé de la pluralité de sortes de dés à l'intérieur de l'image de la face capturée, sur la base du signal d'image ;

dans lequel le point figurant sur chacune des six faces est représenté en tant qu'au moins un point et la détermination du nombre de points (S106, S110) est effectuée sur la base d'une condition de détermination d'au moins une caractéristique dudit au moins un point ou du nombre de point(s) ou encore d'un état de position dudit au moins un point à l'intérieur d'une zone prédéterminée de l'image de la face capturée ; et

dans lequel la détermination du nombre de points consiste tout d'abord, à déterminer si le nombre du point à l'intérieur de la zone prédéterminée de l'image de la face capturée est égal à « 1 » et dans la négative, une détermination des nombres de points correspondant à « 6 », puis à « 5 », puis à « 4 », puis à « 3 », puis à « 2 » est effectuée.

2. Procédé selon la revendication 1, dans lequel :

la détermination du nombre de points (S106, S110) est effectuée pour chaque joueur dans l'ordre ou la détermination du nombre de points est effectuée pour chaque dé dans l'ordre, à partir d'un bord de l'image de la face capturée par rapport à la pluralité de dés.

3. Procédé selon la revendication 1, dans lequel la caractéristique pour identifier chaque joueur comprend :

un format d'affichage, tel que la couleur ou la taille ou encore la police de points de chaque dé de la pluralité de dés (14, 15) ;
le matériau de chaque dé de la pluralité de dés ; ou
une fonction d'identification prévue à l'avance dans chaque dé de la pluralité de dés.

4. Dispositif (10) de détermination du nombre de points sur un dé pour une utilisation avec une pluralité de sortes de dés (14, 15), chaque dé ayant au moins six faces, entre un point et au moins six points figurant sur chaque face et chaque dé ayant une caractéristique pour identifier un joueur associé à chacune des sortes de dés ; le dispositif comprenant :

une section (1) de capture d'images pour capturer une image d'au moins une face supérieure ou une face inférieure de chaque dé de la pluralité de sortes de dés (14, 15) pour engendrer un signal d'image ;
une section d'entrée pour introduire la caractéristique des dés correspondant à chaque joueur afin d'identifier le joueur ;
une section (5) d'enregistrement pour enregistrer la caractéristique introduite ;
un contenant (11) dans lequel un espace pour faire rouler la pluralité de dés est défini, la section de capture d'images se situant dans une partie inférieure ou dans une partie supérieure de celui-ci ;
une section (3) de détermination pour identifier le joueur correspondant à chacune des sortes de dés (14, 15) à l'intérieur de l'image de la face capturée, sur la base de la caractéristique enregistrée et du signal d'image et pour déterminer un nombre de points sur chaque dé de la pluralité de dés à l'intérieur de l'image de la face capturée, sur la base du signal d'image ; et
une section de sortie pour afficher ou délivrer en sortie sous forme de représentation vocale un résultat de détermination du nombre de points pour chaque joueur par la section de détermination, sous forme de valeur numérique ou pour délivrer en sortie le résultat de détermination sous forme d'informations de dés pour un jeu électronique ;
dans lequel le point figurant sur chacune des six faces est représenté en tant qu'au moins un point et la section de détermination effectue la détermination du nombre de points sur la base d'une condition de détermination d'au moins une caractéristique dudit au moins un point de chaque point ou des nombres de point(s) ou encore d'un état de position dudit au moins un point à l'intérieur d'une zone prédéterminée de l'image de la face capturée ; et
dans lequel la section de détermination détermine tout d'abord si le nombre du point à l'intérieur de la zone prédéterminée de l'image de la face capturée est égal à « 1 » et dans la négative, une détermination des nombres de points correspondant à « 6 », puis à « 5 », puis à « 4 », puis à « 3 », puis à « 2 » est effectuée.

5. Dispositif suivant la revendication 4, dans lequel :

la section de détermination effectue la détermination du nombre de points pour chaque joueur dans l'ordre ou la section de détermination effectue la détermination du nombre de points dans l'ordre, à partir d'un bord de l'image de la face capturée par rapport à la pluralité de dés.

**6.** Dispositif suivant la revendication 4, dans lequel :

la section de détermination identifie chaque joueur d'après la caractéristique fondée sur un format d'affichage, tel que la couleur, la taille ou la police des points de chaque dé de la pluralité de dés, sur le matériau de chaque dé de la pluralité de dés ou sur une fonction d'identification prévue à l'avance pour chaque dé de la pluralité de dés.

**7.** Appareil de jeu comprenant le dispositif de détermination des points sur des dés, selon la revendication 4 ; et une section de commande programmée pour :

exécuter un jeu provenant d'un support de mémoire stockant un logiciel de jeu ou un jeu fourni par une connexion à Internet ;
afficher l'image au cours de l'exécution du jeu sur un dispositif d'affichage interne ou externe ; et
afficher sur le dispositif d'affichage ou émettre en sortie sous forme de représentation vocale ou encore incorporer au jeu, selon la nécessité, un résultat de détermination par rapport à la détermination des points correspondant à chaque joueur, obtenu par la section de détermination du nombre de points sur un dé.

FIG. 1

# FIG. 2

EP 1 570 885 B1

# FIG. 3

## FIG. 4

```
                        ┌─────────────┐
                        │    START    │
                        └──────┬──────┘
                               │
S101 ──┐   ┌───────────────────────────────┐
        └──│        DICE THROWING           │
           └───────────────┬───────────────┘
                           │
S102 ──┐        ╱─────────────────────╲      N
        └──────╱    COMPLETION OF       ╲──────
                ╲   THE THROWING       ╱
                 ╲───────────────────╱
                        │ Y
S103 ──┐     ╱───────────────────────╲        Y
        └───╱      ARE THERE           ╲───────────────────────────┐
            ╲  ONLY THE SAME KIND OF  ╱                            │
             ╲       DICE?           ╱      S104 ──┐               │
              ╲─────────────────────╱              │   ┌───────────▼───────────┐
                    │ N                             └───│   IDENTIFY A PLAYER    │
S105 ──┐  ┌─────────────────────────┐                  └───────────┬───────────┘
        └─│ SELECT DICE FOR EACH KIND│   S106 ──┐                   │
          └────────────┬────────────┘           │   ┌──────────────▼──────────┐
S109 ──┐  ┌─────────────────────────┐            └───│ EYE NUMBER DETERMINATION│◄─┐
        └─│ IDENTIFY A PLAYER FOR EACH│              │       OF DICE           │  │
          │      KIND OF DICE         │              └────────────┬────────────┘  │
          └────────────┬────────────┘                            │         S107 ─┐│
S110 ──┐  ┌─────────────────────────┐          N   ╱──────────────────────╲      ││
        └─│ EYE NUMBER DETERMINATION │◄──────────  ╱   DETERMINATION IS     ╲─────┘│
          │      OF PLAYER A         │             ╲        OK?            ╱       │
          └────────────┬────────────┘              ╲───────────────────╱         │
S111 ──┐    ╱───────────────────────╲    N              │ Y                       │
        └──╱   DETERMINATION IS       ╲───────  S108 ──┐ ╱────────────────╲       │
           ╲        OK?              ╱               └─╱   IS THERE         ╲  Y   │
            ╲───────────────────────╱                 ╲ ANY OTHER DICE TO  ╱──────┘
                    │ Y                                 ╲  DETERMINE?     ╱
S112 ──┐  ╱─────────────────────────╲  Y                ╲──────────────╱
        └╱    IS THERE ANY            ╲─┐                      │ N
         ╲ OTHER DICE OF PLAYER A    ╱  │                 ┌────▼────┐
          ╲   TO DETERMINE          ╱   │                 │    A    │
           ╲──────────────────────╱    │                 └─────────┘
                 │ N       S113 ─┐      │
           ┌─────────────────────────┐ │
           │ EYE NUMBER DETERMINATION│ │
           │      OF PLAYER B        │ │
           └────────────┬───────────┘  │
S114 ──┐     ╱──────────────────────╲   N
        └───╱  DETERMINATION IS       ╲──────────────────────────┐
            ╲        OK?            ╱                             │
             ╲──────────────────╱                                │
                    │ Y                          S119 ──┐         │
S115 ──┐  ╱──────────────────────╲  Y                   │        │
  ┌A┐  └─╱   IS THERE ANY          ╲─┐            ┌───────▼───────┐
  └─┘    ╲ OTHER DICE OF PLAYER B ╱  │            │ DETERMINATION OF ERROR│
          ╲   TO DETERMINE       ╱   │            └───────┬───────┘
           ╲──────────────────╱     │     S120 ──┐        │
                 │ N                 │            │ ┌──────▼──────────┐
S116 ──┐ ┌─────────────────────────┐│            └─│ MESSAGE OUTPUT OF│◄──┐
        └│ EYE NUMBER FOR EACH PLAYER│             │THROWING DICE AGAIN│  │
         │IS DISPLAYED AND EYE NUMBER│             └───────┬──────────┘  │
         │ IS REFLECTED IN A GAME    │◄────────────────────┘             │
         └────────────┬────────────┘                                     │
S117 ──┐    ╱──────────────────╲   Y                                     │
        └──╱   POWER IS OFF?     ╲──────────────────┐                     │
           ╲──────────────────╱                     │                     │
                 │ N                         ┌───────▼───────┐            │
S118 ──┐    ╱──────────────────╲   N         │     END       │            │
        └──╱  IS THERE RESET?    ╲───────────└───────────────┘            │
           ╲──────────────────╱                                          │
                 │ Y                                                      │
                 └──────────────────────────────────────────────────────┘
```

## FIG. 5

```
                    ( START )
                        |
  S101 ——[ DICE THROWING ]
  S102       < COMPLETION OF THE THROWING >——N
                        |Y
  S103       < ARE THERE ONLY THE SAME KIND OF DICE? >——Y
                        |N                                    |
  S105 ——[ SELECT DICE FOR EACH KIND ]    S104 ——[ IDENTIFY A PLAYER ]
                        |                                     |
  S109 ——[ IDENTIFY A PLAYER FOR EACH     S106 ——[ EYE NUMBER DETERMINATION
            KIND OF DICE ]                          OF DICE ]
                        |                                     |
  S121 ——[ EYE NUMBER DETERMINATION FROM        < DETERMINATION IS OK? >——N  S107
            ONE DICE OUT OF "N" DICE ]                        |Y
                        |                      S108 —< IS THERE ANY OTHER DICE TO DETERMINE? >——Y
  S122       < DETERMINATION IS OK? >——N                     |N
                        |Y
  S123       < IS THERE ANY DICE TO WAIT FOR DETERMINATION? >——
                        |N
  S124 ——[ EYE NUMBER DETERMINATION OF NEXT DICE ]
                        |
  S125       < DETERMINATION IS OK? >——N         S119
                        |Y                          |
                        |                [ DETERMINATION OF ERROR ]
  S116 ——[ EYE NUMBER FOR EACH PLAYER    S120 ——[ MESSAGE OUTPUT OF
            IS DISPLAYED AND EYE NUMBER           THROWING DICE AGAIN ]
            IS REFLECTED IN A GAME ]
                        |
  S117       < POWER IS OFF? >——Y———————————( END )
                        |N
  S118       < IS THERE RESET? >——N
                        |Y
```

# FIG. 6

S151 DETERMINATION OF "1"    Y

N

S152 DETERMINATION OF "6"    Y

N

S153 DETERMINATION OF "5"    Y

N

S154 DETERMINATION OF "4"    Y

N

S155 DETERMINATION OF "3"    Y

N

S156 DETERMINATION OF "2"    Y

N

# FIG. 7

「1」
RED COLOR

「2」
CLEARANCE IS DIFFERENT FROM THAT OF 3

「3」
EQUAL CLEARANCE
SPOTS ALIGNED

「4」
TWO POINTS
TWO ROWS
PARALLEL
FOUR POINTS ARE LOCATED BY AN EQUAL CLEARANCE FROM EACH OTHER

「5」
· CROSS
· FOUR POINTS ARE LOCATED ON A CIRCUMFERENCE OF A RADIUS R AWAY FROM A CENTER

「6」
THREE POINTS
TWO ROWS AND PARALLEL

27

# FIG. 8

START

S201

ONLY
ONE POINT
?

N

Y

S202

RED OR BLACK
?

N

Y

S203

DETERMINE THAT THE
EYE NUMBER IS ONE

TO S104

TO S152

## FIG. 9

S151 — DETERMINATION OF"1"

- - - - - - - - - - - - - - - - - - - - - - - - - - - - - - - -

S301 — THREE POINTS ? — N →

Y ↓

S302 — ARE THERE TWO ROWS OF THREE POINTS ? — N →

Y ↓

S303 — DISTANCE BETWEEN EACH OF TWO SETS OF THREE EYES IS LONGER THAN DISTANCE OF ONE SET OF THREE POINTS — N →

S304 ↓ Y

PARALLEL? — N →

↓ Y

S305 — DETERMINE THAT THE EYE NUMBER IS SIX

↓

TO S104          TO S153

FIG. 10A

FIG. 10B

FIG. 10C

FIG. 10D

## FIG. 11

S152 — DETERMINATION OF "6"

S401
THREE POINTS? — N →
Y ↓

S402
FOUR POINTS
ARE IN AN EQUAL DISTANCE AWAY
FROM A CENTER? — N →
Y ↓

S403
CROSS? — N →
Y ↓

S404 — DETERMINE THAT THE
EYE NUMBER IS FIVE

TO S154

TO S104

FIG. 12

FIG. 13

# FIG. 14

S153 — DETERMINATION OF "5"

S501 — **TWO POINTS ?** — N →

↓ Y

S502 — **ARE THERE TWO ROWS OF TWO POINTS?** — N →

↓ Y

S503 — **PARALLEL?** — N →

↓ Y

S504 — **FOUR POINTS ARE IN AN EQUAL DISTANCE?** — N →

↓ Y

S505 — DETERMINE THAT THE EYE NUMBER IS FOUR

↓ ↓

TO S104    TO S155

## FIG. 15

## FIG. 16

## FIG. 17

# FIG. 18

S154 — DETERMINATION OF "4"

- - - - - - - - - - - - - - - - - - - - - - - - - - - - - - - - - - - -

S601

THREE POINTS? —N→

│Y

S602

TWO POINTS ARE IN AN EQUAL DISTANCE AWAY FROM A CENTER? —N→

│Y

S603

THREE POINTS ARE IN A LINEAR LINE? —N→

│Y

S604 — DETERMINE THAT THE EYE NUMBER IS THREE

TO S156

TO S104

## FIG. 19

## FIG. 20

## FIG. 21

# FIG. 22

S155 — DETERMINATION OF "3"

- - - - - - - - - - - - - - - - - - - - - - - - - - - - - - - - - - -

S701  TWO POINTS ? — N

S702  Y

ARE THERE TWO ROWS OF TWO POINTS? — Y

N

S703  PARALLEL? — N → S704  DETERMINE THAT THE EYE NUMBER IS TWO

Y

TO S104

TO S105

*FIG. 23*

**EP 1 570 885 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8215423 A
- US 6609710 B
- JP 05212159 B